(19) Europäisches Patentamt / European Patent Office / Office européen des brevets

(11) **EP 4 359 207 B1**

(12) **FASCICULE DE BREVET EUROPEEN**

(45) Date de publication et mention
de la délivrance du brevet:
**09.04.2025 Bulletin 2025/15**

(21) Numéro de dépôt: **22737627.4**

(22) Date de dépôt: **24.06.2022**

(51) Classification Internationale des Brevets (IPC):
**B32B 1/08** (2006.01) **B32B 5/02** (2006.01)
**B32B 27/12** (2006.01) **B32B 27/28** (2006.01)

(52) Classification Coopérative des Brevets (CPC):
**B32B 27/288; B32B 1/08; B32B 5/02; B32B 27/12;
B32B 27/285;** B32B 2260/023; B32B 2260/046;
B32B 2262/106; B32B 2307/546; B32B 2597/00

(86) Numéro de dépôt international:
**PCT/EP2022/067312**

(87) Numéro de publication internationale:
**WO 2022/269024 (29.12.2022 Gazette 2022/52)**

(54) **TUYAU COMPOSITE THERMOPLASTIQUE POUR LE TRANSPORT DE FLUIDE ET CONDUITE FLEXIBLE LE COMPRENANT**

THERMOPLASTISCHER VERBUNDSCHLAUCH ZUM TRANSPORT VON FLÜSSIGKEITEN UND FLEXIBLES ROHR DAMIT

THERMOPLASTIC COMPOSITE HOSE FOR TRANSPORTING FLUID AND FLEXIBLE PIPE COMPRISING SAME

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **25.06.2021 FR 2106833**

(43) Date de publication de la demande:
**01.05.2024 Bulletin 2024/18**

(73) Titulaire: **TechnipFMC Subsea France
92400 Courbevoie (FR)**

(72) Inventeurs:
• **EPSZTEIN, Thomas
76000 ROUEN (FR)**
• **DO, Anh-Tuan
95240 CORMEILLES EN PARISIS (FR)**
• **LUGIERY, Loic
78230 LE PECQ (FR)**

(74) Mandataire: **Lavoix
2, place d'Estienne d'Orves
75441 Paris Cedex 09 (FR)**

(56) Documents cités:
**WO-A1-2019/180050 WO-A2-2006/059220**

**Description**

La présente invention concerne un tuyau composite thermoplastique utile pour le transport de fluides, et une conduite flexible comprenant un tel tuyau composite thermoplastique et utile pour le transport de fluides, en particulier d'hydrocarbures.

Des tuyaux composites thermoplastiques sont connus sous le nom « Thermoplastic Composite Pipe » (TCP) et sont notamment décrits dans le document normatif DNVGL-ST-F119, « Standard Practice - Thermoplastic composites pipes », publié en septembre 2019 par le DNV GL (Det Norske Veritas GL).

Les tuyaux composites thermoplastiques comportent généralement, de l'intérieur vers l'extérieur,

- une gaine polymérique interne tubulaire (« polymer liner » en langue anglaise),
- une structure tubulaire de renfort intermédiaire réalisée à partir d'un enroulement de plusieurs bandes en matériau composite, cette couche intermédiaire étant liée à la gaine interne, et
- éventuellement une gaine polymérique externe (« cover » en langue anglaise) de protection.

La structure tubulaire de renfort étant théoriquement étanche, la gaine interne tubulaire d'étanchéité est optionnelle. Cependant, en pratique, la plupart de ces tuyaux composites thermoplastiques comportent une gaine interne tubulaire afin de garantir l'étanchéité du tuyau dans le cas où la structure tubulaire de renfort présenterait un défaut de préparation affectant son étanchéité. En outre, la présence de la gaine interne tubulaire permet de faciliter la préparation du tuyau composite thermoplastique. En effet, cette première couche forme un noyau central sur lequel on vient prendre appui pour enrouler la pluralité de laminés composite formant la structure tubulaire de renfort.

La structure tubulaire de renfort est liée à la gaine interne tubulaire, afin d'éviter l'écrasement (« collapse » en anglais) de la gaine interne tubulaire lors d'une décompression rapide du tuyau transportant le fluide, en particulier si celui-ci comprend des gaz, ce qui est le cas des hydrocarbures.

Par « lié », on entend que la structure tubulaire de renfort et la gaine interne tubulaire ne sont pas libres de se déplacer l'une par rapport à l'autre. Elles peuvent être liées par collage (par l'intermédiaire d'une colle ou d'un adhésif) ou par soudage.

La gaine externe de protection est optionnelle mais lorsqu'elle est présente, elle est avantageusement liée à la structure tubulaire de renfort, l'ensemble formant ainsi un tuyau TCP de structure complétement liée.

De tels tuyaux composites thermoplastiques sont notamment commercialisées par les sociétés Magma Global Ltd (TCP de marque déposée m-pipe®) et Strohm, ou décrits dans la littérature. Par exemple, la demande WO 2006/059220 décrit un tuyau comprenant une gaine interne en matériau thermoplastique, notamment en polyamide, en fluorure de polyvinylidène (PVDF), en poly(sulfure de phénylène) (PPS), en polyétheréthercétone (PEEK), autour de laquelle est enroulée une bande en matériau thermoplastique renforcée, par exemple avec des fibres de verre ou de carbone, cette bande étant enroulée autour de la gaine interne et liée à celle-ci. Une couche renforçante à base de fibres de verre, de carbone ou d'aramide imprégnées au sein d'une résine thermoplastique peut être ajoutée.

Un des freins à l'utilisation des TCPs est leur faible performance en flexion, qui induit un rayon de courbure minimal (« minimum bend radius » MBR en anglais) élevé. En effet, la structure liée des TCPs les rend plus rigides que des tuyaux à base de couches non liées les unes aux autres, c'est-à-dire dans lesquelles les couches peuvent avoir un mouvement l'une par rapport à l'autre. Cette rigidité du TCP est particulièrement observée lorsque la matrice thermoplastique de la structure tubulaire de renfort intermédiaire est à base de polyétheréthercétone (également nommés PEEK ou poly(oxy1,4-phénylèneoxy-1,4-phénylènecarbonyl-1,4-phénylène). Le développement de TCPs ayant des performances en flexion améliorées est donc requis.

Les TCP peuvent être utilisés tel quels, mais ils peuvent également être intégrés dans des structures tubulaires plus complexes. En particulier, les TCPs peuvent être utilisés au sein de conduites flexibles dites « hybrides » (« hybrid flexible pipe » HFP en anglais) qui présentent une structure intermédiaire entre celle des tuyaux composites thermoplastiques TCP et celle des conduites flexibles de type non lié, décrites ci-après.

La plupart des conduites flexibles utilisées dans l'industrie pétrolière offshore sont des conduites flexibles comportant généralement, de l'intérieur vers l'extérieur :

- éventuellement une carcasse métallique,
- une gaine polymérique interne d'étanchéité,
- au moins une couche de renfort constituée de fils métalliques ou en matériau composite enroulés en hélice autour de la gaine interne d'étanchéité (il s'agit typiquement d'au moins une nappe d'armures de traction, généralement deux nappes d'armure de traction),
- une gaine polymérique externe d'étanchéité.

Ces conduites sont généralement de type non lié (« unbonded » en langue anglaise). Par « non lié », on entend que les couches sont libres de se déplacer l'une par rapport à l'autre. Typiquement, les couches adjacentes ne sont pas collées entre elles, soudées entre elles, et elles ne sont pas noyées (« embedded » en anglais) dans une gaine polymérique ou élastomérique.

De telles conduites flexibles sont notamment décrites dans le document normatif API 17J, « Specification for Unbonded Flexible Pipe », 4ème édition, mai 2014 publié par l'American Petroleum Institute. Elles sont utilisées notamment en eau profonde dans l'industrie pétrolière et gazière. Typiquement, elles sont utilisées pour le transport de fluides d'hydrocarbures, ou encore pour la réinjection de dioxyde de carbone dans un réservoir sous-marin. Les conduites flexibles pétrolières s'étendent généralement à travers une étendue d'eau entre un ensemble de surface et un ensemble de fond. Ces conduites peuvent également s'étendre entre deux ensembles de surface.

L'ensemble de fond est destiné à recueillir le fluide exploité dans le fond de l'étendue d'eau. L'ensemble de surface est généralement flottant. Il est destiné à collecter, potentiellement traiter, et à distribuer le fluide. L'ensemble de surface peut être une plateforme semi-submersible, un FPSO ou un autre ensemble flottant.

Dans certains cas, pour l'exploitation de fluides en eaux profondes, la conduite flexible présente une longueur supérieure à 800 m, voire supérieure à 1000 m ou à 2000 m pour des applications en eaux ultra-profondes.

Pour les grandes profondeurs, la conduite flexible est dimensionnée pour résister à une pression hydrostatique très importante, par exemple 200 bar pour une conduite immergée à 2000 m de profondeur.

De plus, la conduite flexible est généralement dimensionnée pour résister à une tension axiale supérieure au poids total de la conduite flexible suspendue à un ensemble de surface et s'étendant sous l'eau depuis la surface jusqu'au fond marin. Ceci est notamment le cas lorsque la conduite flexible est utilisée comme une conduite montante (« riser » en anglais) destinée à assurer en service une liaison verticale entre le fond marin et l'ensemble de surface. La capacité de la conduite flexible à supporter son propre poids lorsqu'elle est suspendue dans l'eau permet notamment de faciliter son installation en mer à partir d'un navire de pose.

Cependant, ces conduites flexibles ont généralement un poids élevé, ce qui rend leur installation en eau profonde et ultra-profonde complexe et coûteuse. De plus, les conduites montantes de ce type doivent généralement être équipées de bouées pour les applications à grande profondeur, ce qui induit des dépenses supplémentaires. Enfin, les couches de renfort, lorsqu'elles sont métalliques, sont généralement sensibles à la corrosion, notamment à la corrosion sous l'influence de gaz acides du type $H_2S$ et $CO_2$ présents dans les hydrocarbures de certains gisements.

Pour pallier à ces problèmes, des conduites flexibles allégées comportant une structure tubulaire de renfort en matériau composite comprenant une matrice thermoplastique et des fibres de renfort noyées dans la matrice ont été développées, à savoir les conduites flexibles dites « hybrides ».

Dans les conduites flexibles dites « hybrides », la carcasse métallique et la gaine polymérique interne d'étanchéité de la conduite flexible décrite ci-dessus sont remplacées par un tuyau composite thermoplastique TCP. Les conduites flexibles dites « hybrides » comportent donc, de l'intérieur vers l'extérieur :

- une gaine polymérique interne tubulaire,
- une structure tubulaire de renfort réalisée à partir d'un enroulement de plusieurs bandes en matériau composite, cette couche intermédiaire étant liée à la gaine polymérique interne tubulaire,
- une gaine polymérique intermédiaire,
- au moins une couche de renfort constituée de fils métalliques ou en matériau composite enroulés en hélice autour de la gaine polymérique intermédiaire (typiquement au moins une nappe d'armures de traction),
- une gaine polymérique externe d'étanchéité.

La structure tubulaire de renfort reprend généralement l'essentiel des efforts radiaux appliqués à la conduite flexible hybride. La structure tubulaire de renfort, liée à la gaine polymérique interne tubulaire d'étanchéité, présente en outre une fonction de barrière aux gaz, tels que les gaz acides du type $H_2S$ et $CO_2$ contenus dans les hydrocarbures transportés à l'intérieur de la gaine polymérique interne tubulaire. Elle permet ainsi de protéger les éléments métalliques de renfort de la conduite flexible contre les phénomènes de corrosion ou le matériau composite de la couche de renfort d'une dégradation induite par ces gaz.

La ou les couches de renfort constituées de fils métalliques ou en matériau composite sont similaires à celle des conduites flexibles de type non lié, c'est-à-dire qu'elles sont constituées de fils enroulés hélicoïdalement. Il s'agit généralement de nappes d'armures de traction.

En outre, optionnellement, ces conduites flexibles hybrides peuvent comporter une carcasse interne située à l'intérieur de la gaine polymérique interne tubulaire, ladite carcasse interne ayant pour fonction d'augmenter la résistance à l'écrasement (« collapse » en anglais) de la conduite. La carcasse interne est formée par exemple d'un feuillard métallique profilé, enroulé en spirale. Les spires du feuillard sont avantageusement agrafées les unes aux autres, ce qui permet de reprendre les efforts d'écrasement.

Ces conduites flexibles hybrides sont notamment décrites dans l'article « Unbonded Flexible Pipe : Composite Reinforcement for Optimized Hybrid Design » écrit par N. Dodds, V. Jha, J. Latto et D. Finch, et publié sous la référence OTC-25753 lors de la conférence « Offshore Technology Conference » qui s'est tenue à Houston du 4 au 7 mai 2015, ou dans les demandes GB 2 504 065 et WO 2018/091693. Ces deux demandes décrivent des conduites flexibles hybrides dans lesquelles la structure tubulaire de renfort est réalisée à partir d'un enroulement de plusieurs bandes comprenant une matrice polymérique, le PEEK étant cité parmi plusieurs autres polymères envisageables pour cette matrice, et dans laquelle sont noyées des fibres de renfort, qui peuvent être en verre, carbone ou aramide.

Un des freins à l'utilisation de conduites flexibles hybrides, en particulier celles dont la structure tubulaire de renfort est réalisée à partir d'un enroulement de plusieurs bandes à base de PEEK, est leur rigidité. D'ailleurs, le paragraphe à cheval sur les pages 2 et 3 de la demande WO 2021/019180 fait état qu'un inconvénient majeur à utiliser du PEEK comme matrice polymérique de renfort composite au sein d'une conduite flexible est sa rigidité, peu compatible avec la réalisation de conduites flexibles. La rigidité de ces conduites flexibles hybrides a pour conséquence que leur rayon de courbure minimal (« minimum bend radius » MBR en anglais) est plus élevé que celui des conduites flexibles de type non liées conformes à l'API 17J décrites ci-dessus. Or, la capacité à la flexion est une propriété importante lors des phases d'enroulement de la conduite en fabrication, lors du chargement à bord de navires de pose, et lors de phase d'installation en mer. Ceci implique que les unités de production et les équipements de pose utilisés pour les conduites flexibles de type non liées conformes à l'API 17J sont peu adaptés à la préparation et à la pose des conduites flexibles hybrides. La nécessité de développer des unités de fabrication et des équipements de pose dédiés aux conduites flexibles hybrides freine leur développement.

Un des buts de l'invention est de fournir un tuyau composite thermoplastique utile pour le transport de fluides dont les performances en flexion sont améliorées, et en particulier dont le rayon de courbure minimal est réduit.

Un autre but de l'invention est de fournir une conduite flexible hybride dont les performances en flexion sont améliorées, et en particulier dont le rayon de courbure minimal est réduit.

A cet effet, selon un premier objet, l'invention concerne un tuyau composite thermoplastique destiné au transport de fluides comprenant, de l'intérieur vers l'extérieur :

- une gaine interne tubulaire d'axe (A-A') définissant un passage interne de circulation de fluides ; et
- une structure composite de renfort autour de la gaine tubulaire et qui est liée à la gaine tubulaire, la structure composite de renfort comprenant un enroulement d'au moins deux couches de renfort laminées, chaque couche de renfort ayant une matrice thermoplastique comprenant un polyétheréthercétone (PEEK) et renforcée avec des fibres de carbone, ledit polyétheréthercétone ayant :

- une distribution de masse moléculaire en chromatographie par perméation de gel (GPC) telle que :

- la masse moléculaire moyenne en nombre (Mn) est supérieure à 38 000 g/mol,
- la masse moléculaire au pic (Mp) est supérieure à 70 000 g/mol, et
- l'indice de polydispersité (IP) est inférieur à 2,3, et

- une résistance au choc Charpy mesuré à 23°C selon la norme ISO 179/1eA de 2010 supérieure ou égale à 5,5 kJ/m$^2$.

Une matrice thermoplastique comprenant un PEEK et renforcée avec des fibres de carbone pour chaque couche de renfort est avantageuse en ce que :

- les fibres de carbone et le PEEK sont stables chimiquement et à la température. Le PEEK est stable jusqu'à l'approche de sa température de transition vitreuse, généralement autour de 140°C
- une telle couche de renfort a une très faible perméabilité. Les coefficients de perméabilité de la couche de renfort au $CO_2$ et à $H_2S$ mesurés à 80°C sont généralement inférieurs à $5.10^{-8}$ cm$^3$(STP).cm$^2$/cm$^3$.s.bar, avantageusement inférieur à $1.^{10-8}$cm$^3$(STP).cm$^2$/cm$^3$.s.bar.

La distribution de masse moléculaire du polyétheréthercétone est caractérisée par chromatographie par perméation de gel (GPC), typiquement avec un éluant dichlorométhane (DCM)/acide dichloroacétique (DCAA), par exemple avec un ratio volumique DCM / DCAA de 80/20. La calibration de la GPC peut être réalisée par des standards polystyrène (PS) de 580 g/mol à 3 152 000 g/mol.

L'indice de polydispersité (IP) est le ratio de la masse moléculaire moyenne en masse (Mw) par rapport à la masse moléculaire moyenne en nombre (Mn). Plus cet indice est élevé, plus la masse moléculaire a des valeurs dispersées d'une chaine de polymère à l'autre. Un polymère dans lequel toutes les chaines de polymères ont la même longueur a un indice de polydispersité de 1. L'indice de polydispersité (IP) du PEEK est inférieur à 2,3, de préférence inférieur à 2,2.

Le PEEK utilisé au sein de la matrice thermoplastique de chaque couche de renfort a en outre une résistance au choc Charpy mesuré à 23°C selon la norme ISO 179/1eA de 2010 supérieure ou égale à 5,5 kJ/m$^2$, typiquement

supérieure ou égale à 6,0 kJ/m$^2$, notamment supérieure ou égale à 7,0 kJ/m$^2$, de préférence supérieure ou égale à 8,0 kJ/m$^2$.

De préférence, dans le tuyau composite thermoplastique selon l'invention, le PEEK utilisé au sein de la matrice thermoplastique de chaque couche de renfort a une viscosité telle que mesurée à 400°C selon la norme ISO 11443 de 2021 supérieure à 200 Pa.s, notamment supérieure à 250 Pa.s, de préférence supérieure à 300 Pa.s. La viscosité du PEEK augmente notamment avec sa masse moléculaire moyenne en masse (Mw). La viscosité du PEEK peut par exemple être ajustée en faisant varier la quantité d'agent de condensation d'acide méthane sulfonique anhydre (AMSA) par rapport à la quantité initiale d'acide phénoxyphenoxybenzoique (PPBA) lors de la réaction de polymérisation pour une polymérisation par addition électrophile, et/ou en faisant varier la température et/ou la durée de la réaction de polymérisation.

Les inventeurs ont découvert qu'une structure composite de renfort dont les couches de renfort sont à base d'un PEEK ayant une distribution de masse moléculaire et une résistance au choc Charpy telles que définies ci-dessus permettent d'obtenir un tuyau composite thermoplastique dont les performances en flexion sont très fortement améliorées. Cette amélioration est exacerbée lorsque le PEEK a la viscosité définie ci-dessus.

Les inventeurs ont découvert que, contrairement aux attentes, cette amélioration des performances en flexion dépasse très largement une amélioration des performances en flexion obtenue en utilisant un PEEK ne répondant pas à la définition ci-dessus et en baissant le taux de fibre de renfort.

Le tuyau composite thermoplastique selon l'invention a avantageusement un rayon de courbure minimal (« minimum bend radius » MBR en anglais) plus petit qu'un tuyau composite thermoplastique dont les couches de renfort de la structure composite de renfort comprennent un PEEK n'ayant pas une telle distribution de masse moléculaire, et/ou une telle résistances au choc Charpy. Cette diminution du MBR est exacerbée lorsque le PEEK a la viscosité définie ci-dessus.

Ces performances améliorées en flexion rendent également possible la préparation et l'installation offshore, en utilisant les mêmes équipements de fabrication et les mêmes équipements d'installation, de tuyau composite thermoplastique ayant un diamètre interne plus grand.

Le PEEK utilisé au sein de la matrice thermoplastique de chaque couche de renfort peut être linéaire ou ramifié, et est de préférence ramifié. Un PEEK dont la chaîne polymérique est ramifiée , avantageusement de façon contrôlée et limitée, a généralement des propriétés mécaniques, en particulier de résistance à l'impact et/ou de ténacité à la rupture, améliorées.

Les groupes terminaux du PEEK utilisé au sein de la matrice thermoplastique de chaque couche de renfort sont typiquement choisis dans le groupe constitué de F, H, éther de diphényle, phényle, méthylphényle (notamment o-, m- ou p-tolyle), diméthylphényle (notamment o-, m- ou p-xylyle) et méthoxyphényle (notamment o-, m- ou p-méthoxyphényle). Ces groupes, et en particulier le fluor, sont avantageusement stables thermiquement et chimiquement.

Le taux de cristallinité du PEEK utilisé au sein de la matrice thermoplastique de chaque bande en matériau composite de chaque couche de renfort, tel que mesuré par calorimétrie différentielle à balayage (DSC), est notamment de 10 à 50%, de préférence de 20 à 40%, de manière particulièrement préféré de 30 à 40%.

Le taux de cristallinité du PEEK utilisé au sein de la matrice thermoplastique et mesuré après la fabrication de la couche de renfort composite est souvent différent du taux de cristallinité de la bande en matériau composite initiale (une partie du PEEK étant fondu lors de la fabrication de la couche de renfort, une autre partie étant non fondue mais affectée thermiquement). Le taux de cristallinité du PEEK utilisé au sein de la matrice thermoplastique et mesuré après la fabrication de la couche de renfort de la structure tubulaire de renfort du tuyau composite thermoplastique, tel que mesuré par calorimétrie différentielle à balayage (DSC), est généralement de 20 à 40%, de préférence de 25 à 40%. Un taux de cristallinité trop faible peut être préjudiciable pour la perméabilité et/ou la résistance au vieillissement chimique.

Le PEEK utilisé au sein de la matrice thermoplastique de chaque couche de renfort peut être obtenu par polymérisation par substitution nucléophile, typiquement par polycondensation du 4,4'-difluorobenzophenone (BDF) avec l'hydroquinone (HQ) ou un sel de celle-ci. La polymérisation est en général effectuée dans un solvant à haut point d'ébullition tel que dans la diphénylsulfone (DPS). Une polymérisation par substitution nucléophile permet généralement d'obtenir un PEEK linéaire. Les groupes terminaux du PEEK sont généralement des fluors.

Alternativement, le PEEK utilisé au sein de la matrice thermoplastique de chaque couche de renfort peut être obtenu par polymérisation par addition électrophile, typiquement par polymérisation d'acide phénoxyphenoxybenzoique (PPBA) dans un mélange d'acide méthane sulfonique (MSA) et d'acide méthane sulfonique anhydre (MSAN). Ce mélange agit à la fois en solvant et en catalyseur de la réaction de polymérisation. Il peut notamment s'agir du procédé décrit dans la demande US 2002/0040124 ou CN 1162602A. Le procédé de polymérisation par addition électrophile permet d'obtenir un PEEK comprenant des ramifications, et ce de façon contrôlée, ce qui peut conduire à une amélioration des propriétés mécaniques, en particulier de la résistance à l'impact et/ou de la ténacité à la rupture. Les groupes terminaux du PEEK obtenus par ce procédé sont généralement choisis parmi les groupes éther de diphényle, phényle, méthylphényle (notamment o-, mou p-tolyle), diméthylphényle (notamment o-, m- ou p-xylyle) ou méthoxyphényle (notamment o-, m- ou p-méthoxyphényle).

Chaque couche de renfort a une matrice thermoplastique renforcée avec des fibres de carbone.

Les fibres de carbone peuvent être ensimées ou non ensimées, et sont de préférence non ensimées.

Leurs tailles de tow (nombre de filaments constituant la mèche) sont généralement inférieures ou égales à 50K, notamment inférieures ou égales à 24K, de préférence inférieures ou égales à 12K. 50K correspondent à 50 000 filaments constituant la mèche.

Le diamètre des fibres de carbone est généralement inférieur à 10 $\mu$m, notamment inférieur à 8 $\mu$m, par exemple entre 4 $\mu$m et 8 $\mu$m.

Leurs densités est typiquement de 1,7 à 1,9 g/cm$^3$.

De préférence, les fibres de carbone ont un taux d'ensimage tel que déterminé selon la norme ISO 10548 de 2002 rectifiée en 2008 inférieur à 0,4%, notamment inférieur à 0,2%, et de préférence nul. Il s'agit par exemple de fibres de carbone de grade AS4, AS4a, AS7, commercialisées par Hexcel. Les couches de renfort à base d'un PEEK renforcé par de telles fibres de carbone ont en effet des propriétés mécaniques améliorées, notamment les résistances interlaminaire, transverse et en cisaillement plan, caractérisées respectivement en suivant les normes ASTM D2344 de 2016, ASTM D5450 de 2016 et ASTM D3518M de 2018, par rapport à des fibres de carbone dont le taux d'ensimage est supérieur.

Les fibres de carbone présentent généralement une résistance à la traction maximale supérieure à 3 GPa, avantageusement supérieure à 4 GPa, telle que mesurée à 23° C selon la Norme ASTM D885M - 10A(2014)e1.

Dans la présente demande, les termes « résistance à la traction maximale » et « résistance à la traction » ont la même signification et désignent la limite à la rupture en traction (« ultimate tensile strength » en langue anglaise) mesurée lors d'un essai de traction.

En outre, les fibres de carbone présentent avantageusement un module de traction supérieur à 200 GPa, notamment supérieur à 220 GPa, tel que mesuré à 23°C selon la Norme ASTM D885M - 10A(2014)e1.

Dans la présente demande, les termes « module de traction », « module d'Young » et « module d'élasticité en traction » ont la même signification et désignent le module d'élasticité mesuré lors d'un essai de traction.

De préférence, le taux de fibre volumique des fibres de carbone au sein de chaque couche de renfort est compris de 30 à 70%, de préférence de 40 à 60%, de manière particulièrement préféré de 45 à 55% par rapport au volume de la couche composite de renfort. Ce taux volumique peut être déterminé selon la norme NF EN 2564 de 2018. Ainsi, un taux de fibre volumique des fibres de carbone dans les gammes de 30-70%, de préférence 40-60%, de manière particulièrement préféré 45-55% permet avantageusement un bon compromis entre ces résistances.

Les fibres de carbone sont de préférence agencées, pour chaque couche de renfort, de manière unidirectionnelle dans la matrice polymérique. Elles sont alors parallèles les unes aux autres.

Comme explicité ci-dessus, la structure composite de renfort liée à la gaine interne tubulaire confère au tuyau composite thermoplastique sa résistance radiale. La structure composite de renfort permet d'éviter l'écrasement de la gaine interne tubulaire lors d'une décompression rapide du tuyau transportant le fluide.

Le tuyau composite thermoplastique peut être exempt de couche externe supplémentaire. La couche la plus externe du tuyau composite thermoplastique est alors la structure composite de renfort.

En alternative, le tuyau composite thermoplastique peut comprendre une couche d'étanchéité en un matériau thermoplastique autour de la structure composite de renfort. Généralement, cette couche d'étanchéité est alors la couche la plus externe de la structure composite de renfort.

La présence de la couche d'étanchéité, qui revêt alors la structure composite de renfort, limite, de préférence prévient totalement, l'entrée du milieu extérieur, en particulier d'eau, à l'intérieur du tuyau composite thermoplastique. Elle permet en particulier de protéger la structure composite de renfort contre les effets néfastes du milieu extérieur, notamment en évitant la formation de discontinuités.

Selon un deuxième objet, l'invention concerne une conduite flexible destinée au transport de fluides comprenant, de l'intérieur vers l'extérieur :

- le tuyau composite thermoplastique défini ci-dessus ;
- au moins une nappe d'armures de traction, non liée à la couche la plus externe du tuyau composite thermoplastique, la au moins une nappe d'armures de traction comprenant au moins un élément d'armure enroulé autour de ladite couche la plus externe ; et
- optionnellement une gaine externe d'étanchéité disposée autour de la au moins une nappe d'armures de traction.

La couche la plus externe du tuyau composite thermoplastique est généralement soit la structure composite de renfort, soit la couche d'étanchéité lorsque le tuyau composite thermoplastique contient une telle couche.

La conduite flexible selon l'invention est donc une conduite flexible « hybride ».

Comme la conduite flexible selon l'invention comprend le tuyau composite thermoplastique selon l'invention, elle a également des performances en flexion améliorées par rapport à une conduite flexible dont le PEEK n'a pas la distribution de masse moléculaire et/ou la résistance Charpy telles que définies ci-dessus. La conduite flexible selon l'invention a avantageusement un rayon de courbure minimal plus petit qu'une conduite flexible dont les couches de renfort comprennent un PEEK ne répondant pas à la définition ci-dessus.

Il est également possible de concevoir, de fabriquer et d'installer offshore, en utilisant des équipements de fabrication et d'installation offshore existant et déjà utilisés pour les conduites flexibles telles que décrites dans l'API 17J, une conduite flexible "hybride" ayant un diamètre interne plus grand qu'une conduite flexible "hybride" dont le PEEK n'a pas la distribution de masse moléculaire, et/ou la résistance Charpy telles que définies ci-dessus.

En outre, ces performances améliorées en flexion permettent de préparer la conduite flexible selon l'invention dans les unités de fabrication habituellement utilisées pour fabriquer des conduites flexibles de type non liées conformes à l'API 17J et d'utiliser les mêmes équipements de pose, comme le carrousel, les bobines et/ou les tours de pose. Ces avantages permettent de réduire drastiquement les coûts, puisque le développement d'unités de fabrication et d'équipements de pose dédiés aux conduites flexibles hybrides selon l'invention n'est alors plus requis. Diminuer le rayon de courbure minimal permet ainsi de produire des conduites flexibles de diamètres plus importants tout en limitant les investissements industriels.

Selon un troisième objet, l'invention concerne un procédé de préparation du tuyau composite thermoplastique défini ci-dessus comprenant les étapes suivantes :

- fourniture d'une gaine tubulaire d'axe central (A-A') définissant un passage interne de circulation de fluides ;
- formation d'une structure composite de renfort autour de la gaine tubulaire et liée à la gaine tubulaire, la structure composite de renfort étant formée par enroulement d'au moins deux couches de renfort laminées, chaque couche de renfort ayant une matrice thermoplastique comprenant un PEEK tel que défini ci-dessus et renforcée avec des fibres de carbone ;
- éventuellement, formation, autour de la structure composite de renfort, d'une couche d'étanchéité en matériau thermoplastique.

La formation de la couche d'étanchéité peut être réalisée par enroulement autour de la structure composite de renfort d'au moins deux bandes d'un matériau thermoplastique, et soudage des au moins deux bandes entre elles. Alternativement, la couche d'étanchéité est formée par extrusion d'un matériau thermoplastique sur la structure composite de renfort.

Selon un quatrième objet, l'invention concerne un procédé de préparation de la conduite flexible définie ci-dessus comprenant les étapes suivantes :

- fourniture du tuyau composite thermoplastique tel que défini ci-dessus ;
- disposition, autour de la couche la plus externe du tuyau composite thermoplastique, d'au moins une nappe d'armures de traction, non liée à ladite couche la plus externe, la au moins une nappe d'armures de traction comprenant au moins un élément d'armure enroulé autour de ladite couche la plus externe ; et
- optionnellement, disposition d'une gaine externe d'étanchéité autour de la au moins une nappe d'armures de traction.

Le procédé de préparation de la conduite flexible peut comprendre la préparation du tuyau composite thermoplastique. Le procédé de préparation de la conduite flexible peut ainsi comprendre les étapes suivantes :

- fourniture d'une gaine tubulaire d'axe central (A-A') définissant un passage interne de circulation de fluides ;
- formation d'une structure composite de renfort autour de la gaine tubulaire et liée à la gaine tubulaire, la structure composite de renfort étant formée par enroulement d'au moins deux couches de renfort laminées, chaque couche de renfort ayant une matrice thermoplastique comprenant un PEEK tel que défini ci-dessus et renforcée avec des fibres de carbone ;
- disposition, autour de la structure composite de renfort, d'au moins une nappe d'armures de traction, non liée à la structure composite de renfort, la au moins une nappe d'armures de traction comprenant au moins un élément d'armure enroulé autour de la structure composite de renfort ; et
- optionnellement, disposition d'une gaine externe d'étanchéité autour de la au moins une nappe d'armures de traction.

En alternative, lorsqu'une couche d'étanchéité en matériau thermoplastique est formée autour de la structure composite de renfort, le procédé de préparation de la conduite flexible peut comprendre les étapes suivantes :

- fourniture d'une gaine tubulaire d'axe central (A-A') définissant un passage interne de circulation de fluides ;
- formation d'une structure composite de renfort autour de la gaine tubulaire et liée à la gaine tubulaire, la structure composite de renfort étant formée par enroulement d'au moins deux couches de renfort laminées, chaque couche de renfort ayant une matrice thermoplastique comprenant un PEEK tel que défini ci-dessus et renforcée avec des fibres de carbone ;
- formation, autour de la structure composite de renfort, d'une couche d'étanchéité en matériau thermoplastique ;

- disposition, autour de la couche d'étanchéité, d'au moins une nappe d'armures de traction, non liée à la couche d'étanchéité, la au moins une nappe d'armures de traction comprenant au moins un élément d'armure enroulé autour de la couche d'étanchéité ; et
- optionnellement, disposition d'une gaine externe d'étanchéité autour de la au moins une nappe d'armures de traction.

Selon un cinquième objet, l'invention concerne l'utilisation du tuyau composite thermoplastique défini ci-dessus ou de la conduite flexible définie ci-dessus pour le transport de fluides, en particulier d'hydrocarbures. L'invention concerne également une méthode de transport de fluides, notamment d'hydrocarbures, comprenant le transport du fluide au sein du tuyau composite thermoplastique défini ci-dessus ou de la conduite flexible définie ci-dessus. Lors du transport, la pression au sein de la conduite flexible est généralement supérieure à 100 bars, et peut même atteindre 1000 bars, et la température est généralement supérieure à 90°C, notamment à 110°C, parfois supérieure à 130°C, voire 170°C.

Selon un sixième objet, l'invention concerne l'utilisation d'un polyétheréthercétone ayant :

- une distribution de masse moléculaire en chromatographie par perméation de gel (GPC) telle que :

  - la masse moléculaire moyenne en nombre (Mn) est supérieure à 38 000 g/mol,
  - la masse moléculaire au pic (Mp) est supérieure à 70 000 g/mol, et
  - l'indice de polydispersité (IP) est inférieur à 2,3,

- une résistance au choc Charpy mesuré à 23°C selon la norme ISO 179/1eA de 2010 supérieure ou égale à 5,5kJ/m$^2$,
- et éventuellement une viscosité telle que mesurée à 400°C selon la norme ISO 11443 de 2021 supérieure à 200 Pa.s,

  comme matériau polymérique d'une matrice thermoplastique, renforcée avec des fibres de carbone, de couches de renfort laminées et enroulées pour former une structure composite de renfort d'un tuyau composite thermoplastique destiné au transport de fluides et comprenant, de l'intérieur vers l'extérieur :

  - une gaine interne tubulaire d'axe (A-A') définissant un passage interne de circulation de fluides ;
  - ladite structure composite de renfort autour de la gaine tubulaire et qui est liée à la gaine tubulaire,
  - éventuellement au moins une couche d'étanchéité en matériau thermoplastique autour de la structure composite de renfort,

  pour réduire le rayon de courbure minimal dudit tuyau composite thermoplastique et/ou pour augmenter le taux de déformation en flexion lors du seuil d'endommagement dudit tuyau composite thermoplastique.

Le seuil d'endommagement peut être déterminé grâce à la réalisation de différents tests de flexion à différents niveaux de déformations et à la vérification par une analyse destructive de type microscopie optique ou microscopie électronique de la présence de fissure dans la couche de renfort. Trois types de résultats peuvent être obtenus. Le premier type de résultat correspond à l'absence de fissure. Le second type de résultat correspond à l'observation d'une ou plusieurs fissures non traversantes. Une fissure est qualifiée de non traversante lorsqu'elle ne s'étend pas de la peau interne de la couche de renfort à la peau externe de la couche de renfort. Un troisième type de résultat correspond à l'observation d'une ou plusieurs fissures traversantes. Une fissure est qualifiée de traversante lorsqu'elle s'étend de la peau interne de la couche de renfort à la peau externe de la couche de renfort. Le seuil d'endommagement est déterminé par le niveau de déformation à appliquer pour permettre l'observation d'une ou plusieurs fissures non traversantes. Le seuil de fissuration traversante est déterminé par le niveau de déformation à appliquer pour permettre l'observation d'une ou plusieurs fissures traversantes.

Avantageusement, le taux de déformation en flexion correspondant au seuil d'endommagement du tuyau composite thermoplastique est supérieur à 2,0%, notamment supérieur à 2,5%, encore plus avantageusement supérieur à 3.0%.

Avantageusement, le taux de déformation en flexion correspondant au seuil de fissuration traversante est supérieur à 3,0%, notamment supérieur à 4,0%, encore plus avantageusement supérieur à 5,0%.

L'invention concerne également l'utilisation d'un tel polyétheréthercétone comme matériau polymérique d'une matrice thermoplastique, renforcée avec des fibres de carbone, de couches de renfort laminées et enroulées pour former une structure composite de renfort d'une conduite flexible destinée au transport de fluides comprenant, de l'intérieur vers l'extérieur :

- une gaine interne tubulaire d'axe (A-A') définissant un passage interne de circulation de fluides ;
- une structure composite de renfort autour de la gaine tubulaire et qui est liée à la gaine tubulaire, la structure composite de renfort comprenant un enroulement d'au moins deux couches de renfort laminées, chaque couche de renfort ayant une matrice thermoplastique comprenant un polyétheréthercétone (PEEK) renforcée avec des fibres de carbone ;

- éventuellement au moins une couche d'étanchéité en un matériau thermoplastique autour de la structure composite de renfort,
- au moins une nappe d'armures de traction, non liée à la couche adjacente du côté interne (c'est-à-dire à la structure composite de renfort ou à la couche d'étanchéité si celle-ci a été formée), la au moins une nappe d'armures de traction comprenant au moins un élément d'armure enroulé autour de ladite couche adjacente ; et
- optionnellement une gaine externe d'étanchéité disposée autour de la au moins une nappe d'armures de traction ;

pour réduire le rayon de courbure minimal de ladite conduite flexible et/ou pour augmenter le taux de déformation en flexion lors du seuil d'endommagement de ladite conduite flexible.

Avantageusement, le taux de déformation en flexion lors du seuil d'endommagement de la conduite flexible est supérieur à 2,0%, notamment supérieur à 2,5%.. encore plus avantageusement supérieur à 3,0%.

Avantageusement, le taux de déformation en flexion correspondant au seuil de fissuration traversante est supérieur à 3,0%, notamment supérieur à 4,0%, encore plus avantageusement supérieur à 5,0%.

L'invention sera mieux comprise à la lecture de la description qui va suivre, donnée uniquement à titre d'exemple, et faite en se référant aux figures annexées, sur lesquelles :

[Fig 1] La figure 1 est une vue en perspective partiellement écorchée d'un tuyau composite thermoplastique selon l'invention.

[Fig 2] La figure 2 est une vue en perspective partiellement écorchée d'une conduite flexible selon l'invention.

Dans tout ce qui suit, les termes « extérieur » ou « externe » et « intérieur » ou « interne » s'entendent respectivement comme plus éloigné radialement de l'axe du tuyau composite thermoplastique (ou de la conduite flexible) et comme plus proche radialement de l'axe du tuyau composite thermoplastique (ou de la conduite flexible).

Les figures illustrent une alternative dans laquelle le tuyau composite thermoplastique comprend une couche d'étanchéité 22. On ne sortirait pas du cadre de l'invention si cette couche était absente.

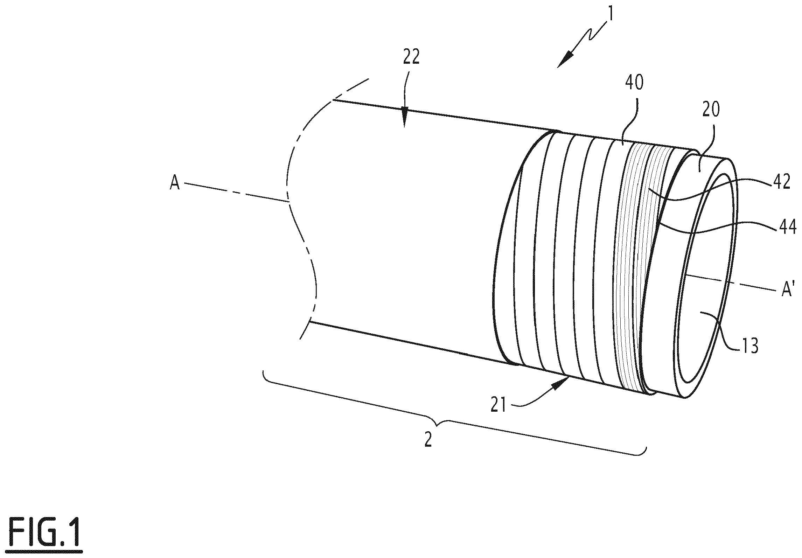

Un tuyau composite thermoplastique 1 selon l'invention est illustré schématiquement par la figure 1.

Le tuyau composite thermoplastique 1 comporte un tronçon central 2 illustré en partie sur la figure 1. Il comporte, à chacune des extrémités axiales du tronçon central 2, un embout d'extrémité (non représenté).

En référence à la figure 1, le tuyau composite thermoplastique 1 délimite un passage interne 13 de circulation d'un fluide, avantageusement d'un fluide pétrolier, en particulier d'hydrocarbures. Le passage interne 13 s'étend suivant un axe A-A', entre l'extrémité amont et l'extrémité aval du tuyau composite thermoplastique 1. Il débouche à travers les embouts (non représentés).

Dans l'exemple de la figure 1, le tuyau composite thermoplastique 1 comporte au moins une gaine polymérique interne tubulaire 20 constituant avantageusement une gaine interne d'étanchéité, une structure composite de renfort 21 tubulaire, revêtant la gaine tubulaire 20 et étant liée à celle-ci, et une couche d'étanchéité 22, qui revêt la structure composite de renfort 21.

La gaine tubulaire 20 est destinée à confiner de manière étanche le fluide transporté dans le passage 13. La gaine tubulaire 20 a aussi pour fonction de protéger la structure composite de renfort 21 contre l'abrasion liée à la présence de particules abrasives, par exemple du sable, au sein du fluide transporté dans le passage 13.

La gaine tubulaire 20 comprend généralement un polymère choisi parmi le PEK (polyéthercétone), le PEEK (polyétheréthercétone), le PEEKK (polyétheréthercétonecétone), le PEKK (polyéthercétonecétone), le PEKEKK (polyéthercétoneéthercétonecétone), et un mélange de ceux-ci, de préférence un PEEK (polyétheréthercétone)

En variante, la gaine tubulaire 20 comprend un autre polymère, de préférence thermoplastique. Par exemple, le polymère formant la gaine tubulaire 20 est choisi parmi une polyoléfine telle que du polyéthylène ou du polypropylène, un polyamide tel que du PA11 ou du PA12, ou un polymère fluoré tel que du polyfluorure de vinylidène (PVDF) ou encore les copolymères de polyfluorure de vinylidène et de polyhexafluoropropylène (PVDF-HFP) , le PAI (polyamide-imide), le PEI (polyéther-imide), le PSU (polysulfone), le PPSU (polyphénylsulfone), le PES (polyéthersulfone), le PAS (polyarylsulfone), le PPE (polyphénylèneéther), le PPS (polysulfure de phénylène), les LCP (polymères à cristaux liquides), le PPA (polyphtalamide), les copolymères de ceux-ci, et/ou leurs mélanges ou encore un mélange d'un ou de plusieurs de ceux-ci avec un polysiloxane, le PTFE (polytétrafluoroéthylène) ou le PFPE (perfluoropolyéther).

La gaine tubulaire 20 peut par exemple comprendre un mélange de polyaryléthercétone et d'un polysiloxane, tel que ceux décrits dans la demande WO 2019/150060.

Le polymère de la gaine tubulaire 20 est avantageusement de même nature que celui de la matrice polymérique 40 définie ci-après. Par « de même nature », on entend au sens de la présente invention que le polymère de la gaine tubulaire 20 et le polymère de la matrice polymérique 40 sont propres à fondre et à former un mélange intime, sans séparation de phase, après refroidissement. Typiquement, le polymère de la gaine tubulaire 20 est une polyaryléthercétone (PAEK) telle que du polyétheréthercétone (PEEK) ou du polyéthercétonecétone (PEKK) ou un mélange de ceux-ci.

Le polymère de la gaine tubulaire 20 peut être le PEEK tel que défini ci-dessus et utilisé au sein de la matrice polymérique 40 définie ci-après.

De préférence, la gaine tubulaire 20 comprend au moins 50 % en masse du polymère défini ci-dessus (ou du mélange de ceux-ci lorsqu'il s'agit d'un mélange), plus préférentiellement au moins 75% en masse, encore plus préférentiellement au moins 80% en masse, typiquement au moins 90% en masse, par rapport à la masse totale de la gaine tubulaire 20.

Selon un mode de réalisation préféré, la gaine tubulaire 20 est constituée d'un des polymères définis ci-dessus ou d'un des mélanges définis ci-dessus et de charges et/ou d'additifs.

L'épaisseur de la gaine tubulaire 20 est par exemple comprise entre 1 mm et 20 mm.

La gaine tubulaire 20 est formée d'un tube en matériau polymère, d'une bande en matériau polymère assemblé, ou d'un mat de polymère imprégné.

Lorsque la gaine tubulaire 20 est formée d'un tube, elle est avantageusement obtenue par extrusion d'un tube thermoplastique choisi notamment parmi les polymères mentionnés ci-dessus.

Lorsque la gaine tubulaire 20 est formée d'une bande en matériau polymère assemblé, elle est réalisée avantageusement par extrusion et enroulement de bandes thermoplastiques d'un polymère tel que décrit plus haut. De préférence, les spires d'une première couche sont jointives (bord à bord sans recouvrement) et les spires d'une couche supérieure sont disposées de façon à avoir un recouvrement de deux bandes adjacentes inférieures assurant l'étanchéité de la gaine tubulaire 20.

La structure composite de renfort 21 revêt la gaine tubulaire 20. Elle est assemblée sur la gaine tubulaire 20 pour former un ensemble lié avec la gaine tubulaire 20.

La structure composite de renfort 21 comporte un enroulement d'au moins deux couches de renfort laminées, et éventuellement, une couche anti-délamination interposée entre au moins deux couches de renfort.

Chaque couche de renfort laminée comporte une superposition de couches composites de renfort.

En référence à la figure 1, chaque couche composite de renfort comporte une matrice polymérique 40 et des fibres de carbone 42 noyées dans la matrice polymérique 40.

La matrice polymérique 40 comprend le PEEK tel que défini ci-dessus. De préférence, la matrice polymérique 40 comprend au moins 50 % en masse du PEEK défini ci-dessus (ou du mélange de ceux-ci lorsqu'il s'agit d'un mélange), plus préférentiellement au moins 75% en masse, encore plus préférentiellement au moins 80% en masse, typiquement au moins 90% en masse, de préférence au moins 95% en masse, par rapport à la masse totale de la matrice polymérique 40.

Selon un mode de réalisation préféré, la matrice polymérique 40 est constituée d'un PEEK défini ci-dessus ou d'un mélange de PEEK définis ci-dessus et de charges et/ou d'additifs. Du noir de carbone est un exemple de charge.

Les fibres de carbone 42 sont de préférence telles que définies ci-dessus.

Les fibres de carbone 42 sont de préférence agencées, pour chacune des couches composites de renfort, de manière unidirectionnelle dans la matrice polymérique 40. Elles sont alors parallèles les unes aux autres. En variante, les fibres de carbone 42 sont croisées suivant deux directions orthogonales, ou encore sont disposées de manière aléatoire dans la matrice (non représenté).

La longueur des fibres de carbone 42 dans chaque couche composite est généralement supérieure à 100 m, et est notamment comprise entre 100 m et 4500 m.

De préférence, chaque couche composite de renfort est formée d'un enroulement d'au moins une bande composite 44 présentant plusieurs couches de fibres de carbone 42 noyées dans une matrice polymérique 40, chaque bande ayant une longueur supérieure à au moins 10 fois sa largeur et à au moins 10 fois son épaisseur.

Par exemple, la longueur de chaque bande composite 44 est supérieure à 100 m et est comprise entre 100 m et 4500 m. La largeur de chaque bande composite 44 est comprise entre 6 mm et 50 mm. L'épaisseur de chaque bande composite 44 est comprise entre 0,1 mm et 1 mm.

De préférence, chaque bande composite 44 présente à 23°C, un module de traction supérieur à 10 GPa, notamment compris entre 30 GPa et 170 GPa, tel que mesuré par la Norme NF EN 2561, Janvier 1996, une élongation à la rupture supérieure à 1 %, notamment comprise entre 1 % et 5%, telle que mesurée par la Norme NF EN 2561, Janvier 1996, et/ou une résistance à la traction maximale supérieure à 100 MPa, et notamment comprise entre 350 MPa et 3500 MPa telle que mesurée par la Norme NF EN 2561, Janvier 1996.

Lors de la réalisation de chaque couche de renfort, la ou chaque bande composite 44 est enroulée en hélice autour de l'axe A-A' de la gaine tubulaire 20, et est chauffée pour provoquer la fusion partielle de la matrice polymérique 40, et la liaison avec les spires successives de la bande composite 44 et la gaine tubulaire 20, et éventuellement avec la couche adjacente externe qui peut être une autre couche de renfort, une couche anti-délamination, ou la couche d'étanchéité 22.

La valeur absolue de l'angle d'hélice d'enroulement $\beta$ de chaque bande composite 44 par rapport à l'axe A-A' du tuyau composite thermoplastique 1 est généralement comprise entre 20° et 85°. Cette valeur dépend de l'application visée. Lorsque le tuyau composite thermoplastique est utilisé seul (à savoir pas au sein d'une conduite flexible hybride 10) et est destiné à être mis sous pression interne et/ou sous pression externe (application conduite d'écoulement (« flowline » en anglais) ou conduite flexible de liaison (« jumper » en anglais), cette valeur est typiquement comprise entre 45 et 65°, de préférence entre 50° et 60°. Lorsque le tuyau composite thermoplastique est utilisé seul (à savoir pas au sein d'une conduite flexible hybride 10) et est destiné à être mis sous pression interne, externe et sous tension, cette valeur est typiquement comprise entre 20 et 85°. Lorsque le tuyau composite thermoplastique est destiné à être utilisé au sein d'une conduite hybride, typiquement pour des applications conduite d'écoulement (« flowline » en anglais) ou conduite montante (« riser » en anglais), cette valeur est typiquement comprise entre 50° et 85°, de préférence entre 55° et 70°. Ceci assure une élongation du composite sous l'effet de la pression interne.

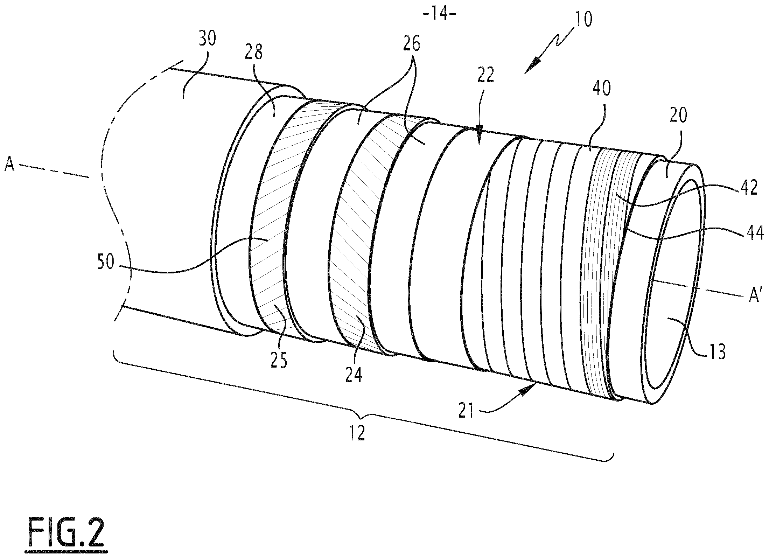

Lorsque le tuyau composite thermoplastique est utilisé comme couche interne d'une conduite flexible hybride 10 (comme illustré à la figure 2 et décrit ci-après), un tel angle d'hélice permet également une coopération adéquate avec les nappes d'armures 24, 25.

L'épaisseur de chaque couche composite laminée est généralement comprise entre 1 mm et 30 mm.

Le nombre de couches composites au sein de la structure composite de renfort est typiquement de 2 à 300, notamment de 10 à 200, de préférence de 20 à 100. Généralement, ce nombre est toujours pair pour assurer l'équilibre de la structure composite de renfort.

La couche d'étanchéité 22 est destinée à confiner de manière étanche la structure composite de renfort 21. En particulier, la couche d'étanchéité a pour fonction de limiter, de préférence d'empêcher, le contact entre le milieu extérieur, en particulier l'eau, et la structure composite de renfort 21.

La couche d'étanchéité 22 peut être liée ou non-liée à la structure composite de renfort 21.

La perméabilité de la couche d'étanchéité 22 est fonction du matériau choisi pour sa réalisation ainsi que de la température à laquelle la couche d'étanchéité 22 est par la suite exposée.

La perméabilité à l'eau des matériaux polymères pouvant convenir à la réalisation de la couche d'étanchéité 22 est comprise entre $1 \times 10^{-7}$ $cm^3(STP).cm^{-1}.s^{-1}.bar^{-1}$ et $2 \times 10^{-5}$ $cm^3(STP).cm^{-1}.s^{-1}.bar^{-1}$.

Dès lors, pour une épaisseur de couche d'étanchéité 22 comprise entre 1 mm et 20 mm, la perméabilité à l'eau de la couche est de $5 \times 10^{-8}$ $cm^3(STP).cm^{-2}.s^{-1}.bar^{-1}$ à $2 \times 10^{-4}$ $cm^3(STP).cm^{-1}.s^{-1}.bar^{-1}$.

Par « perméabilité de la couche d'étanchéité 22 » on entend la capacité à ladite couche d'étanchéité 22 dans sa globalité de se laisser traverser par l'eau. La perméabilité de la couche d'étanchéité peut être différente de la perméabilité du matériau constituant la couche, notamment en raison de la présence d'éventuelles discontinuités ou failles dans la couche d'étanchéité qui faciliteraient le passage d'eau ou parce que la couche d'étanchéité est réalisée à base d'une structure discontinue comme une bande enroulée. La perméabilité de la couche d'étanchéité s'entend bien ici comme celle de la couche dans sa globalité incluant le matériau et les éventuels interstices ou interfaces entre les régions discontinues formant la couche. Dans le contexte de l'invention, la mesure de perméabilité se réfère à la perméabilité de la couche d'étanchéité dans son ensemble, telle qu'elle est présente dans le tuyau composite thermoplastique 1 de l'invention.

La perméabilité à l'eau du matériau constituant la couche d'étanchéité 22 peut être mesurée par la technique de la perte de poids. Cette méthode de mesure de perméabilité d'un liquide est notamment décrite dans la publication "Emmanuel RICHAUD, Bruno FLACONNÈCHE, Jacques VERDU - Biodiesel permeability in polyethylene - Polymer Testing - Vol. 31, p.170-1076 - 2012. Connaissant la perméabilité à l'eau du matériau, il est alors possible de calculer la perméabilité de la couche d'étanchéité 22 en appliquant la formule suivante :

$$Kcouche = \frac{Kmat.}{e}$$

avec :

- Kcouche, la perméabilité à l'eau de la couche d'étanchéité (exprimée en $cm^3(STP).cm^{-1}.s^{-1}.bar^{-1}$),
- Kmat., la perméabilité du matériau constituant la couche d'étanchéité (exprimée en $cm^3(STP).cm^{-1}.s^{-1}.bar^{-1}$), et
- e, l'épaisseur de la couche d'étanchéité 22 (exprimée en cm).

La couche d'étanchéité 22 est formée en matériau thermoplastique. Par exemple, le polymère formant la couche d'étanchéité 22 est choisi parmi une polyoléfine, éventuellement réticulée, telle que du polyéthylène ou du polypropylène; un élastomère thermoplastique (TPE) tel que le polyuréthane thermoplastique (TPE-U ou TPU) ou les copolymères styréniques (TPE-S ou TPS) ou les copolymères de polypropylène et d'éthylène-propylène-diène (PP-EPDM) vulcanisés (TPE-V ou TPV); un polyamide tel que du PA11 ou du PA12 ; ou un polymère fluoré tel que du polyfluorure de vinylidène (PVDF) ou encore les copolymères de polyfluorure de vinylidène et de polyhexafluoropropylène (PVDF-HFP).

En variante, la couche d'étanchéité 22 comprend un polymère choisi parmi le PEK (polyéthercétone), le PEEK (polyétheréthercétone), le PEEKK (polyétheréthercétonecétone), le PEKK (polyéthercétonecétone), le PEKEKK (polyéthercétoneéthercétonecétone), le PAI (polyamide-imide), le PEI (polyéther-imide), le PSU (polysulfone), le PPSU (polyphénylsulfone), le PES (polyéthersulfone) , le PAS (polyarylsulfone), le PPE (polyphénylèneéther), le PPS (polysulfure de phénylène) les LCP (polymères à cristaux liquides), le PPA (polyphtalamide) et/ou leurs mélanges ou encore un mélange d'un ou de plusieurs de ceux-ci avec un polysiloxane, le PTFE (polytétrafluoroéthylène) ou le PFPE (perfluoropolyéther).

La couche d'étanchéité 22 peut par exemple comprendre un mélange de polyaryléthercétone et d'un polysiloxane, tel que ceux décrits dans la demande WO2019/150060.

Selon un mode de réalisation préféré, la couche d'étanchéité 22 est constitué d'un des polymères définis ci-dessus ou d'un des mélanges de ceux-ci et de charges et/ou additifs.

Le polymère de la couche d'étanchéité 22 est avantageusement de même nature que celui de la matrice polymérique 40, plus avantageusement de même nature que celui de la matrice polymérique 40 et que celui de la gaine 20. Par « de même nature », on entend au sens de la présente invention que le polymère de la couche d'étanchéité 22 et le polymère de la matrice polymérique 40, et éventuellement le polymère de la gaine tubulaire 20, sont propres à fondre et à former un mélange intime, sans séparation de phase, après refroidissement.

Le polymère de la couche d'étanchéité 22 peut être le PEEK tel que défini ci-dessus et utilisé au sein de la matrice polymérique 40 définie ci-dessus.

De préférence, la couche d'étanchéité 22 comprend au moins 50 % en masse du polymère défini ci-dessus (ou du mélange de ceux-ci lorsqu'il s'agit d'un mélange), plus préférentiellement au moins 75% en masse, encore plus préférentiellement au moins 80% en masse, typiquement au moins 90% en masse, par rapport à la masse totale de la couche d'étanchéité 22.

Selon un mode de réalisation préféré, la couche d'étanchéité 22 est constituée d'un matériau thermoplastique. La couche d'étanchéité 22 peut être dépourvue de matériaux de renfort.

De préférence, la couche d'étanchéité 22 est continue. Par « continue », on entend au sens de l'invention que la structure de la couche d'étanchéité 22 est identique en tout point. En particulier, la couche d'étanchéité 22 ne comprend pas de trous radiaux débouchant qui pourraient faciliter le passage d'un fluide, notamment d'eau, à travers la couche. Une couche d'étanchéité 22 présentant une porosité fermée est ainsi considérée comme homogène au sens de l'invention.

L'épaisseur de la couche d'étanchéité 22 est par exemple comprise entre 1 mm et 20 mm, de préférence elle est inférieure ou égale à 15 mm, de préférence de 3 mm à 10 mm.

Dans ce cas, la couche d'étanchéité 22 est formée d'un seul tenant d'une gaine tubulaire polymérique. La couche d'étanchéité est alors typiquement formée à partir d'une gaine tubulaire extrudée en polymère thermoplastique.

En variante, la couche d'étanchéité 22 est réalisée à partir d'une structure discontinue, par exemple d'une bande polymérique assemblée. Par exemple, elle est formée par l'enroulement d'au moins deux bandes d'un matériau thermoplastique et par soudage des au moins deux bandes entre elles.

Lorsque la couche d'étanchéité 22 est formée d'une gaine tubulaire, elle est avantageusement obtenue par extrusion d'un matériau thermoplastique autour de la structure composite de renfort 21, le matériau étant choisi notamment parmi les polymères mentionnés ci-dessus. Dans ce premier cas, l'épaisseur de la couche d'étanchéité 22 est typiquement de 3 à 15 mm, de préférence de 4 mm à 10 mm.

Lorsque la couche d'étanchéité 22 est formée d'une bande polymérique assemblé, elle est réalisée avantageusement par enroulement de bandes thermoplastiques d'un polymère tel que décrit plus haut, suivi d'une étape de soudage des bandes thermoplastiques. De préférence, les spires d'une première couche sont jointives (bord à bord sans recouvrement) et les spires d'une couche supérieure sont disposées de façon à avoir un recouvrement de deux bandes adjacentes, inférieures assurant l'étanchéité de la couche d'étanchéité 22. Dans ce second cas, l'épaisseur de la couche d'étanchéité 22 est typiquement inférieure à 3 mm, avantageusement inférieure à 2 mm, encore plus avantageusement inférieure à 1 mm

Selon un premier mode de réalisation, la couche d'étanchéité 22 est non liée à la structure composite de renfort 21. La couche d'étanchéité 22 est alors de préférence dépourvue de matériaux de renforts.

Selon ce premier mode de réalisation, le polymère formant la couche d'étanchéité 22 est choisi parmi une polyoléfine, éventuellement réticulée, telle que du polyéthylène ou du polypropylène ; un élastomère thermoplastique TPE tel que le polyuréthane thermoplastique (TPE-U ou TPU) ou les copolymères styréniques (TPE-S ou TPS) ou les copolymères de polypropylène et d'éthylène-propylène-diène (PP-EPDM) vulcanisés (TPE-V ou TPV); un polyamide tel que du PA11 ou du PA12 ; un polymère fluoré tel que du polyfluorure de vinylidène (PVDF) ou encore les copolymères de polyfluorure de vinylidène et de polyhexafluoropropylène (PVDF-HFP).

La couche d'étanchéité 22 est alors formée d'une gaine tubulaire obtenue par extrusion d'un matériau thermoplastique autour de la structure composite de renfort 21. La couche d'étanchéité 22 présente alors une épaisseur typiquement de 3 à 15 mm, de préférence de 4 mm à 10 mm.

Selon un second mode de réalisation, la couche d'étanchéité 22 est liée à la structure composite de renfort 21. La couche d'étanchéité 22 est alors de préférence dépourvue de matériaux de renforts.

Selon ce second mode de réalisation, la couche d'étanchéité 22 comprend un polymère choisi parmi le PEK (polyéthercétone), le PEEK (polyétheréthercétone), le PEEKK (polyétheréthercétonecétone), le PEKK (polyéthercétonecétone), le PEKEKK (polyéthercétoneéthercétonecétone), le PAI (polyamide-imide), le PEI (polyéther-imide), le PSU (polysulfone), le PPSU (polyphénylsulfone), le PES (polyéthersulfone) , le PAS (polyarylsulfone), le PPE (polyphénylèneéther), le PPS (polysulfure de phénylène) les LCP (polymères à cristaux liquides), le PPA (polyphtalamide), les copolymères de ceux-ci et/ou leurs mélanges ou encore un mélange d'un ou de plusieurs de ceux-ci avec un polysiloxane, le PTFE (polytétrafluoroéthylène) ou le PFPE (perfluoropolyéther). De préférence, la couche d'étanchéité 22 comprend du PEEK (polyétheréthercétone). Le PEEK de la couche d'étanchéité 22 diffère généralement de celui de la matrice thermoplastique 40 de la couche de renfort de la structure composite de renfort 21. Les grades PEEK utilisés pour former la couche d'étanchéité 22 sont des grades à très haute viscosité (viscosité à l'état fondu généralement supérieure à 450 Pa.s) , alors que les grades PEEK utilisés pour former la matrice composite thermoplastique 40 de la couche de renfort de la structure composite de renfort 21 sont généralement des grades à viscosité plus faibles (viscosité inférieure à 200 Pa.s). La longueur des chaines polymères du PEEK (distribution de masse moléculaire), et donc la viscosité, des PEEK de chacune de ces couches est donc différente.

La couche d'étanchéité 22 est alors réalisée par extrusion ou par enroulement de bandes thermoplastiques préalablement obtenues par pultrusion (ou extrusion par tirage), typiquement par enroulement d'au moins deux bandes thermoplastiques, et la couche d'étanchéité 22 présente une épaisseur inférieure à 3 mm, avantageusement inférieure à 2 mm, encore plus avantageusement inférieure à 1 mm.

Le procédé de préparation d'un tuyau composite thermoplastique 1 selon l'invention est décrit ci-après. Il comprend les étapes suivantes :

1) la fourniture d'une gaine tubulaire 20 d'axe central (A-A') définissant un passage interne 13 de circulation de fluides ;
2) la formation d'une structure composite de renfort 21 autour de la gaine tubulaire 20 et liée à la gaine tubulaire 20, la structure composite de renfort 21 étant formée par un enroulement d'au moins deux couches de renfort laminées, chaque couche de renfort ayant une matrice thermoplastique comprenant un PEEK tel que défini ci-dessus et renforcée avec des fibres de carbone 42 ;
3) la formation, autour de la structure composite de renfort 21, d'une couche d'étanchéité 22 en matériau thermoplastique.

Initialement, la gaine 20 est fabriquée et/ou est fournie dans l'installation. Avantageusement, la gaine 20 subit une étape préalable de pré-compactage. La gaine 20 est ensuite chauffée pour amener sa surface externe à une température supérieure à 100°C, et notamment comprise entre 100 °C et 350 °C.

De préférence, la gaine 20 doit présenter une forme la plus cylindrique possible. A cet effet, il est possible de façonner la surface externe de la gaine en utilisant des trains de galets en rotation autour de la gaine. Un tel dispositif est par exemple décrit dans WO 2019/180050.

Une pluralité de couches de renfort sont ensuite formées autour de la gaine 20 à partir des bandes 44.

Pour chaque couche de renfort, une pluralité de bandes 44 sont déroulées en parallèle autour de la gaine 20. Des éléments de guidage peuvent être utilisés pour maintenir les bandes 44 parallèles entre elles, avec un jeu contrôlé.

Les bandes 44 parallèles sont ensuite chauffées, avantageusement à une température comprise de 350°C à 500°C (le point de fusion du PEEK étant de l'ordre de 350°C). Ceci entraine avantageusement la fusion au moins partielle de la matrice polymérique 40.

Avantageusement, les bandes 44 sont enroulées en hélice autour de la surface externe définie par la gaine 20, généralement avec une valeur absolue de l'angle d'hélice d'enroulement β de chaque bande composite 44 par rapport à l'axe A-A' du tuyau composite thermoplastique 1 telle que définie ci-dessus.

De préférence, et juste après leur enroulement, un train de galets tel que défini est entraîné en rotation et s'applique sur les bandes 44 de manière à les compacter. A cet effet, les galets successifs définissent une génératrice de compactage qui s'appuie sur les bandes 44.

Les bandes 44 sont compactées de manière uniforme, en évitant la désorganisation des fibres de carbone 42 présentes dans la matrice polymérique 40, tout en assurant une répartition efficace du matériau fondu de la matrice polymérique 40 pour former une structure composite de renfort 21 continue et étanche.

Puis, la structure composite de renfort 21 subit une étape de post-compactage au cours de laquelle la surface externe de la structure composite de renfort 21 est ramollie par chauffage, puis à nouveau compactée par les trains de galets rotatifs. Les galets des trains de galets roulent suivant une trajectoire en hélice le long des bandes 44 respectives, assurant une désorganisation minimale des fibres de carbone 42.

Avantageusement, les opérations de pré-compactage, de formation de la structure tubulaire et de post-compactage sont répétées pour former plusieurs couches de renfort concentriques avec d'autres bandes 44, comme décrit précédemment.

La structure composite de renfort 21 est ainsi fabriquée couche par couche, chaque nouvelle couche extérieure présentant une épaisseur sensiblement égale à celle d'une bande 44. Ces opérations peuvent être répétées plusieurs dizaines de fois, notamment lorsque la ou les bandes 44 présentent une épaisseur nettement inférieure à l'épaisseur finale de la paroi de la structure composite de renfort 21 souhaitée.

De plus, les caractéristiques des bandes 44 et/ou les paramètres de pose et/ou de compactage peuvent être modifiés à chaque fois qu'une nouvelle couche est ajoutée. Par exemple, il est possible de modifier l'angle d'hélice des bandes 44, notamment pour croiser les fibres de deux couches superposées.

La couche d'étanchéité 22 est ensuite formée autour de la structure composite de renfort 21.

Selon un premier mode de réalisation, la couche d'étanchéité 22 est formée par extrusion d'un thermoplastique choisi parmi les polymères mentionnés ci-dessus. De préférence, selon ce mode de réalisation, le matériau thermoplastique est extrudé directement sur la structure composite de renfort 21.

Selon ce premier mode de réalisation, l'épaisseur de la couche d'étanchéité 22 est typiquement de 3 à 15 mm, de préférence de 4 mm à 10 mm.

Selon un second mode de réalisation, la couche d'étanchéité 22 est formée par enroulement autour de la structure composite de renfort 21 de bandes thermoplastiques d'un polymère tel que décrit plus haut, suivi du soudage des bandes. De préférence, les spires d'une première couche sont jointives (bord à bord sans recouvrement) et les spires d'une couche supérieure sont disposées de façon à avoir un recouvrement de deux bandes adjacentes inférieures assurant l'étanchéité de la gaine tubulaire 20.

Avantageusement, les bandes 44 formant la structure composite de renfort 21 et les bandes thermoplastiques formant la couche d'étanchéité 22 sont enroulées avec un même angle d'enroulement par rapport à l'axe A-A' du tuyau composite thermoplastique 1.

De préférence, la couche d'étanchéité 22 est obtenue par enroulement d'au moins deux bandes thermoplastiques autour de la structure composite de renfort 21. Les bandes thermoplastiques sont typiquement préparées par extrusion du matériau thermoplastique.

Selon une variante de réalisation, la couche d'étanchéité 22 est un bi-couche disposé autour de la structure composite de renfort 21 dans lequel chaque couche comprend l'enroulement d'au moins deux bandes thermoplastiques préparées par extrusion du matériau thermoplastique.

Le soudage des bandes thermoplastiques de la couche d'étanchéité 22 est réalisé selon toute méthode connue, typiquement par chauffage des zones de jonctions entre les bandes à une température comprise entre 150°C et 500°C, la température dépendant de la nature du polymère thermoplastique constituant les bandes.

Lorsque les bandes thermoplastiques de la couche d'étanchéité 22 sont en PEEK (point de fusion de l'ordre de 350°C), la température de chauffage est avantageusement comprise entre 350°C et 500°C. Lorsque les bandes thermoplastiques sont en PVDF (point de fusion de l'ordre de 180°C), la température de chauffage est avantageusement comprise entre 180°C et 280°C, préférentiellement comprise entre 200°C et 250°C.

Typiquement, le soudage des bandes thermoplastiques de la couche d'étanchéité 22 est réalisé par rayonnement laser, thermique, électromagnétique ou flash. Le soudage des bandes thermoplastiques permet la formation d'une couche d'étanchéité 22 continue.

Selon ce second mode de réalisation, l'épaisseur de la couche d'étanchéité 22 est typiquement inférieure à 3 mm, avantageusement inférieure à 2 mm, encore plus avantageusement inférieure à 1 mm.

Lorsque le polymère de la couche d'étanchéité 22 est de même nature que celui de la matrice polymérique 40 de la structure composite de renfort 21, à savoir en PEEK tel que défini ci-dessus, le procédé de l'invention permet la préparation de tuyau composite thermoplastique 1 dans lequel la couche d'étanchéité 22 est liée ou non liée à la structure composite de renfort 21, en fonction de la méthode employée pour former la couche d'étanchéité 22.

Selon une première variante, la couche d'étanchéité 22 est formée par enroulement de bandes thermoplastiques autour de la structure composite de renfort 21, suivi du soudage des bandes entre elles. Dans ce cas, la couche d'étanchéité 22 obtenue est liée à la structure composite de renfort 21.

Selon une seconde variante, la couche d'étanchéité 22 est formée par extrusion d'un matériau thermoplastique. Dans ce cas, le caractère lié ou non lié de la couche d'étanchéité 22 dépend de la température à laquelle le matériau thermoplastique extrudé et la couche composite de renfort 21 sont mis en contact. Lorsque le matériau thermoplastique extrudé et la couche composite de renfort 21 sont mis en contact à une température inférieure à la température de fusion du matériau thermoplastique, la couche d'étanchéité 22 résultante est non liée à la structure composite de renfort 21. A l'inverse, lorsque le matériau thermoplastique extrudé et la couche composite de renfort sont mis en contact à une température supérieure ou égale à la température de fusion du matériau thermoplastique, la couche d'étanchéité 22 résultante est liée à la structure composite de renfort 21.

Toutefois, lorsque le polymère de la couche d'étanchéité 22 n'est pas de même nature que celui de la matrice polymérique 40, le procédé de l'invention conduit exclusivement à la formation d'une couche d'étanchéité 22 non liée à la structure composite de renfort 21.

Une conduite flexible 10 selon l'invention est illustrée schématiquement par la figure 2.

La conduite flexible 10 comporte un tronçon central 12 illustré en partie sur la figure 1. Elle comporte, à chacune des extrémités axiales du tronçon central 12, un embout d'extrémité (non représenté).

La conduite flexible 10 selon l'invention n'est pas limitée à une certaine catégorie d'embouts d'extrémité. Des exemples d'embouts d'extrémité pouvant être utilisés avec les conduites flexibles 10 de l'invention sont décrits dans WO 2019/068757.

En référence à la figure 2, la conduite flexible 10 délimite un passage interne 13 de circulation d'un fluide, avantageusement d'un fluide pétrolier. Le passage interne 13 s'étend suivant un axe A-A', entre l'extrémité amont et l'extrémité aval de la conduite flexible 10. Il débouche à travers les embouts (non représentés).

La conduite flexible 10 est destinée à être disposée à travers une étendue d'eau 14 dans une installation d'exploitation de fluide, notamment d'hydrocarbures.

L'étendue d'eau 14 est par exemple, une mer, un lac ou un océan. La profondeur de l'étendue d'eau 14 au droit de l'installation d'exploitation de fluide est par exemple comprise entre 500 m et 4000 m.

L'installation comporte un ensemble de surface et un ensemble de fond (non représentés) ou deux ensembles de surface qui sont avantageusement raccordés entre eux par la conduite flexible 10.

L'ensemble de surface est par exemple flottant. Il est avantageusement formé par une unité flottante de production, de stockage et de déchargement appelée FPSO (« Floating Production, Storage and Offloading » en langue anglaise), une unité flottante dédiée au gaz naturel liquéfié appelée FLNG (« Floating Liquified Natural Gas » en langue anglaise), une plate-forme semi-submersible ou une bouée de déchargement. En variante, l'ensemble de surface est une structure rigide fixe de type « jacket » ou une structure oscillante assujettie au fond de la mer pouvant être par exemple un TLP (« Tension Leg Platform » en langue anglaise).

Dans cet exemple, la conduite flexible 10 raccorde l'ensemble de fond à l'ensemble de surface. La conduite flexible 10 est donc partiellement immergée dans l'étendue d'eau 14 et présente une extrémité supérieure disposée dans un volume d'air.

En variante, la conduite flexible 10 est totalement immergée dans l'étendue d'eau 14 et raccorde par exemple deux ensembles de fond (non représentés) entre eux.

Une autre variante consiste en une conduite flexible 10 partiellement immergée dans l'étendue d'eau 14 et raccordant par exemple deux ensembles de surface (typiquement une bouée de déchargement et un FPSO). Ceci est notamment le cas des lignes flexibles de type OOL (« Oil Offloading Line » en langue anglaise).

Comme illustré par la figure 2, la conduite flexible 10 délimite une pluralité de couches concentriques autour de l'axe A-A', qui s'étendent continûment le long du tronçon central 12 jusqu'aux embouts situés aux extrémités de la conduite.

Une conduite flexible 10 selon l'invention comprend le tuyau composite thermoplastique 1 selon l'invention. Elle comporte donc au moins une gaine polymérique interne tubulaire 20 constituant avantageusement une gaine interne d'étanchéité, une structure composite de renfort 21 tubulaire, revêtant la gaine tubulaire 20 et étant liée à celle-ci, et une couche d'étanchéité 22, qui revêt la structure composite de renfort 21. La gaine polymérique interne tubulaire 20, la structure composite de renfort 21 tubulaire et la couche d'étanchéité 22 sont donc telles que définies ci-dessus, et tous les modes de réalisation décrits ci-dessus, en particulier pour la matrice polymérique 40 et le PEEK qu'elle comprend et pour les fibres de carbone 42, sont bien sûr applicables.

La conduite flexible 10 est dépourvue de carcasse interne, elle est désignée par le terme anglais « smooth bore ». La surface interne de la gaine tubulaire 20 délimite directement le passage interne 13.

La conduite flexible 10 comporte en outre dans cet exemple une pluralité de nappes d'armures de traction 24, 25 disposées extérieurement par rapport à la couche d'étanchéité 22, en étant non liées à la couche d'étanchéité 22. Les nappes d'armures 24, 25 peuvent être métalliques ou en matériau composite, notamment un composite à base de polymère thermoplastique ou thermodurcissable. Des nappes d'armure en matériau composite sont typiquement obtenues par procédé de pultrusion.

Avantageusement, et selon l'utilisation souhaitée, la conduite flexible 10 comporte en outre des couches anti-usure 26, interposées entre la couche d'étanchéité 22 et les nappes d'armures de traction 24, 25, ainsi qu'entre les nappes d'armures de traction 24, 25. Les couches anti-usure 26 sont constituées d'une ou de plusieurs bandes en matériau thermoplastiques enroulées le long de l'axe (A-A') mais qui ne sont pas soudées entre elles, contrairement à la couche d'étanchéité 22. Ces couches anti-usure 26 ne sont donc pas étanches.

La conduite flexible 10 comporte en outre avantageusement un ruban de renfort 28, enroulé autour des nappes d'armures de traction 24, 25 et une gaine externe 30, destinée à la protection mécanique et d'étanchéité de la conduite flexible 10.

Dans l'exemple représenté sur la figure 2, la conduite flexible 10 comporte une nappe d'armures interne 24, et une nappe d'armures externe 25 autour de laquelle est disposée la gaine extérieure 30.

Chaque nappe d'armures 24, 25 comporte des éléments d'armure 50 longitudinaux enroulés à pas long autour de l'axe A-A' de la conduite.

Par « enroulé à pas long », on entend que la valeur absolue par rapport à l'axe A-A' de l'angle d'hélice est inférieure à 55°, typiquement comprise entre 25° et 45°, et parfois entre 20° et 45°.

Les éléments d'armure 50 d'une première nappe 24 sont enroulés généralement suivant un angle opposé par rapport aux éléments d'armure 50 d'une deuxième nappe 25. Ainsi, si l'angle d'enroulement par rapport à l'axe A-A' des éléments d'armure 50 de la première nappe 24 est égal à + $\alpha$, $\alpha$ étant compris entre 25° et 45°, l'angle d'enroulement par rapport à l'axe A-A' des éléments d'armure 50 de la deuxième nappe 25 disposée au contact de la première nappe 24 est par exemple de - $\alpha$, avec $\alpha$ compris entre 25° et 45°.

Les éléments d'armure 50 sont par exemple formés par des fils métalliques. En variante, les éléments d'armure 50 sont formés par des fils ou rubans plats en composite, généralement renforcés avec des fibres de renfort.

La combinaison d'un angle $\beta$ d'enroulement des bandes composites 44 de valeur absolue comprise entre 55° et 85°, de préférence entre 60 et 80°, avec un angle $\alpha$ d'enroulement des éléments d'armure 50 de valeur absolue comprise entre 25° et 55°, de préférence entre 25° et 45° empêche l'élongation de la structure composite de renfort 21 par effet de compensation produit par les nappes d'armures 24, 25.

La structure composite de renfort 21 pouvant présenter une résistance à la traction faible et ayant tendance à s'allonger sous l'effet d'efforts axiaux, les nappes d'armures 24, 25 reprennent les efforts axiaux et préviennent ainsi l'allongement de la structure composite de renfort 21.

La combinaison optimale entre les angles $\alpha$, $\beta$ d'enroulement réduit drastiquement les contraintes dans l'ensemble tubulaire formé par la gaine interne 20 et la structure composite de renfort 21, et donc l'épaisseur nécessaire pour résister aux efforts de flexion, de pression interne ou/et d'écrasement (« collapse »).

En outre, grâce à la raideur axiale de la structure composite de renfort 21, les nappes d'armures de traction 24, 25 résistent mieux à la compression axiale sous les conditions de pression externe du grand fond.

En outre, l'angle $\alpha$ d'enroulement des éléments d'armure 50 de valeur absolue comprise entre 25° et 55°, pris en combinaison avec l'angle $\beta$ d'enroulement des bandes composites 44 de valeur absolue comprise entre 60° et 80 ° autorise une compression de la structure composite de renfort 21, réduisant le rayon de courbure minimal.

La gaine externe 30 est destinée à empêcher la perméation de fluide depuis l'extérieur de la conduite flexible 10 vers l'intérieur. Elle est avantageusement réalisée en matériau polymère, notamment à base d'une polyoléfine, telle que du polyéthylène, à base d'un polyamide, tel que du PA11 ou du PA12, à base d'un polymère fluoré tel que du polyfluorure de vinylidène (PVDF), ou à base d'un thermoplastique élastomère comprenant une polyoléfine, telle que le polyéthylène ou le polypropylène, associée à un élastomère du type SBS (styrène butadiène styrène), SEBS (styrène éthylène butadiène styrène), EPDM (éthylène propylène diène monomère), polybutadiène, polyisoprène ou polyéthylène-butylène.

L'épaisseur de la gaine externe 30 est par exemple comprise entre 5 mm et 15 mm.

Chaque couche anti-usure 26 est formée par exemple d'une polyoléfine telle qu'un polyéthylène (PE) ou un polypropylène (PP), d'une polyamide telle que du PA-11 ou du PA-12, d'un polymère fluoré tel que du polyfluorure de vinylidène (PVDF), d'une polyaryléthercétone (PAEK) telle que du polyétheréthercétone (PEEK) ou du polyéthercétonecétone (PEKK), ou encore d'un matériau polymère comprenant un groupe sulfoné tel que le polysulfone (PSU), le polyéthersulfone (PES) ou le polyphenylsulfone (PPSU). Une couche anti-usure 26 est disposée entre la couche d'étanchéité 22 et la première nappe d'armures de traction 24. Une autre couche anti-usure 26 est placée entre les nappes d'armures 24, 25, avantageusement comme indiqué dans la Norme API 17J, 4e édition Mai 2014.

Le ruban de renfort 28 est formé par exemple d'une couche anti-flambement de résistance élevée afin de limiter le flambement des armures de traction 24, 25 dans l'éventualité où la conduite serait soumise au phénomène d'effet de fond inverse. Cette couche est par exemple en aramide. Le ruban est enroulé autour de la nappe d'armures 25 située la plus à l'extérieur, entre la nappe d'armures 25 et la gaine externe 30, avantageusement comme indiqué dans la Norme API 17J, 4e édition Mai 2014.

Le procédé de préparation d'une conduite flexible 10 est décrit ci-après. Il comprend les étapes suivantes :

1') la fourniture du tuyau composite thermoplastique 1 tel que défini ci-dessus,

2') la disposition, autour de la couche d'étanchéité 22 du tuyau composite thermoplastique 1, d'au moins une nappe d'armures 24, 25 de traction, non liée à la couche d'étanchéité 22, la au moins une nappe d'armures 24, 25 de traction comprenant au moins un élément d'armure 50 enroulé autour de la couche d'étanchéité 22 ; et,

3') optionnellement, la disposition d'une gaine externe 30 d'étanchéité disposée autour de la au moins une nappe d'armures 24, 25 de traction.

Les éléments d'armure 50 des nappes d'armures de traction 24, 25 sont enroulés autour de la couche d'étanchéité 22 du tuyau composite thermoplastique 1, de manière non liée avec la couche d'étanchéité 22. Une couche anti-usure 26 peut être interposée entre la couche d'étanchéité 22 et la première nappe d'armures de traction 24, et entre chaque nappe d'armures de traction 24, 25.

Puis, un ruban de renfort 28 peut être enroulé autour de la nappe d'armures de traction 25 la plus à l'extérieur.

Ensuite, la gaine externe 30 est formée autour des nappes d'armures 24, 25.

## EXEMPLES

**Exemple 1 : Préparation de structures composites de renfort comprenant un enroulement de couches de renfort laminées réalisées à partir d'une matrice thermoplastique PEEK renforcée avec des fibres de carbone**

Des structures composites de renfort de petites dimensions (diamètre interne 40 mm) ont été préparées par enroulement de bandes composites présentant plusieurs couches de fibres de carbone (CF) noyées dans une matrice en PEEK (ci-après PEEK-CF). L'angle d'hélice d'enroulement β de chaque bande était de l'ordre de +/- 65° par rapport à l'axe de la structure composite de renfort, un tel design correspondant à celui visé pour une application TCP ou HFP. Chaque structure composite de renfort entourait et était liée à une gaine interne tubulaire de 1,5 mm d'épaisseur en PEEK haute viscosité (viscosité à l'état fondu supérieure 450 Pa.s) afin de former des TCP. La gaine interne tubulaire avait été obtenue par un procédé d'extrusion.

Les caractéristiques des bandes PEEK-CF et de ses composants PEEK et fibres de carbone sont détaillées au tableau 1. Les fibres de carbone n'étaient pas ensimées.

[Tableau 1]

Tableau 1 : Description des bandes PEEK-CF et les caractéristiques de ses composants PEEK et fibres de carbone

| PEEK-CF | Grade de PEEK | viscosité mesurée à 400°C (ISO 11443) (Pa.s) | résistance au choc Charpy mesurée à 23°C (ISO 179/1eA) (kJ/m$^2$) | Chaîne polymérique du PEEK | Mp (GPC) (g/mol) | Mn (GPC) (g/mol) | IP (GPC) | Grade de fibres de carbone | Fraction volumique en fibres de carbone (%) |
|---|---|---|---|---|---|---|---|---|---|
| 1 (comp.) | Grade A | 130 | 4,2 | Linéaire | 58300 | 34700 | 2,3 | AS4a | 50 |
| 2 (comp.) | Grade A | 130 | 4,2 | Linéaire | 58300 | 34700 | 2,3 | AS4a | 47 |
| 3 (comp.) | Grade A | 130 | 4,2 | Linéaire | 58 300 | 34700 | 2,3 | AS4a | 44 |
| 4 (inv.) | Grade B | 209 | 6 | Ramifiée | 73300 | 38100 | 2,2 | AS4a | 50 |
| *avant préparation de la structure composite de renfort | | | | | | | | | |

Dans tous les cas, la valeur absolue de l'angle d'hélice d'enroulement β de chaque bande par rapport à l'axe de la structure composite thermoplastique était de +/- 65°.

Le tableau 2 fournit les données de fabrication des structures composites de renfort ainsi que les taux de cristallisation mesurés sur les structures composites de renfort.

[Tableau 2]

Tableau 2 : Données de fabrication des structures composites de renfort TCP et caractérisations

| TCP | Bande du tableau 1 utilisée | Angle minimal (exprimé en valeur absolue) (°) | Angle maximal (exprimé en valeur absolue) (°) | Epaisseur totale de la structure composite de renfort (mm) | taux de cristallisation mesurés sur la structure composite de renfort (%) |
|---|---|---|---|---|---|
| 1 | 1 | 63 | 68 | 3,0 +/- 0,2 | 29 |
| 2 | 2 | 63 | 68 | 3,0 +/- 0,2 | 27 |

(suite)

| TCP | Bande du tableau 1 utilisée | Angle minimal (exprimé en valeur absolue) (°) | Angle maximal (exprimé en valeur absolue) (°) | Epaisseur totale de la structure composite de renfort (mm) | taux de cristallisation mesurés sur la structure composite de renfort (%) |
|---|---|---|---|---|---|
| 3 | 3 | 63 | 68 | 3,0 +/- 0,2 | 32 |
| 4 | 4 | 63 | 68 | 3,0 +/- 0,2 | 29 |

**Exemple 2 : Résultats de tests en flexion**

Les structures composites de renfort de l'exemple 1 ont été découpé en plusieurs sections d'un mètre. Chaque section de structure composite est soumise à un cycle de flexion pur à un niveau de déformation donné puis remit en position droite. La section de structure composite est ensuite soumise à une analyse destructive de type microscopie optique afin de vérifier présence de fissure non traversante ou de fissure traversante. Ce protocole est reproduit sur une nouvelle section de structure composite en augmentant le niveau de déformation par rapport à la section de structure composite préalablement testée, et cela jusqu'à l'identification d'un niveau de déformation permettant l'observation d'au moins une fissure traversante.

Ce protocole permet pour chaque structure composite de définir une plage de déformation correspondant au seuil d'endommagement et une plage de déformation correspondant au seuil de fissuration traversante.

Il est connu que diminuer la fraction volumique en fibres de carbone au sein de la structure composite permet d'améliorer les performances en flexion des TCP. C'est pourquoi des TCP 1, 2 et 3 ne différant que par la fraction volumique en fibres de carbone, ont été préparés.

Les résultats sont fournis au tableau 3 pour la structure composite TCP 1.

[Tableau 3]

Tableau 3 : Résultats essais de flexion sur TCP 1 (comparatif)

| TCP | Section | Niveau de déformation (%) | Observation de fissure non traversante (oui / non) | Observation de fissure traversante (oui / non) |
|---|---|---|---|---|
| **1** | 1 | 1,6 | non | non |
| **1** | 2 | 1,8 | oui | non |
| **1** | 3 | 2,0 | oui | non |
| **1** | 4 | 2,2 | oui | non |
| **1** | 5 | 2,4 | oui | oui |

Les résultats sont fournis au tableau 4 pour la structure composite TCP 2.

[Tableau 4]

Tableau 4 : Résultats essais de flexion sur TCP 2 (comparatif)

| TCP | Section | Niveau de déformation (%) | Observation de fissure non traversante (oui / non) | Observation de fissure traversante (oui / non) |
|---|---|---|---|---|
| 2 | 1 | 1,6 | non | non |
| 2 | 2 | 1,8 | oui | non |
| 2 | 3 | 2,0 | oui | non |
| 2 | 4 | 2,2 | oui | non |

(suite)

| TCP | Section | Niveau de déformation (%) | Observation de fissure non traversante (oui / non) | Observation de fissure traversante (oui / non) |
|-----|---------|---------------------------|----------------------------------------------------|------------------------------------------------|
| 2 | 5 | 2,4 | oui | non |
| 2 | 6 | 2,6 | oui | oui |

Les résultats sont fournis au tableau 5 pour la structure composite TCP 3.

[Tableau 5]

Tableau 5 : Résultats essais de flexion sur TCP 3 (comparatif)

| TCP | Section | Niveau de déformation (%) | Observation de fissure non traversante (oui / non) | Observation de fissure traversante (oui / non) |
|-----|---------|---------------------------|----------------------------------------------------|------------------------------------------------|
| 3 | 1 | 1,6 | non | non |
| 3 | 2 | 1,8 | non | non |
| 3 | 3 | 2,0 | oui | non |
| 3 | 4 | 2,2 | oui | non |
| 3 | 5 | 2,4 | oui | non |
| 3 | 6 | 2,6 | oui | non |
| 3 | 7 | 2,8 | oui | non |
| 3 | 8 | 3,0 | oui | oui |

Les résultats sont fournis au tableau 6 pour la structure composite TCP 4.

[Tableau 6]

Tableau 6 : Résultats essais de flexion sur TCP 4 (selon l'invention)

| TCP | Section | Niveau de déformation (%) | Observation de fissure non traversante (oui / non) | Observation de fissure traversante (oui / non) |
|-----|---------|---------------------------|----------------------------------------------------|------------------------------------------------|
| 4 | 1 | 1,6 | non | non |
| 4 | 2 | 1,8 | non | non |
| 4 | 3 | 2,0 | non | non |
| 4 | 4 | 2,2 | non | non |
| 4 | 5 | 2,4 | non | non |
| 4 | 6 | 2,6 | non | non |
| 4 | 7 | 2,8 | non | non |
| 4 | 8 | 3,0 | non | non |
| 4 | 9 | 3,2 | oui | non |
| 4 | 10 | 3,4 | oui | non |
| 4 | 11 | 3,6 | oui | non |
| 4 | 12 | 3,8 | oui | non |
| 4 | 13 | 4,0 | oui | non |

(suite)

| TCP | Section | Niveau de déformation (%) | Observation de fissure non traversante (oui / non) | Observation de fissure traversante (oui / non) |
|---|---|---|---|---|
| 4 | 14 | 4,2 | oui | non |
| 4 | 15 | 4,4 | oui | non |
| 4 | 16 | 4,6 | oui | non |
| 4 | 17 | 4,8 | oui | non |
| 4 | 18 | 5,0 | oui | non |
| 4 | 19 | 5,2 | oui | non |
| 4 | 20 | 5,4 | oui | non |
| 4 | 21 | 5,6 | oui | non |
| 4 | 22 | 5,8 | oui | non |
| 4 | 23 | 6,0 | oui | oui |

La comparaison des taux de déformation correspondant à l'identification des seuils d'endommagement et des seuils de fissuration traversante des structures composites de renfort TCP 1, TCP 2 et TCP 3 (tous comparatifs) permet de confirmer que la diminution du taux de fibre à un effet positif mais limité dans l'amélioration des performances en flexion d'une structure composite de renfort TCP.

La fraction volumique en fibres de carbone dans la structure composite de renfort TCP 4 (selon l'invention) est de 50%, et donc supérieure à la fraction volumique en fibres de carbone dans les structures composites de renfort TCP 2 (47%) et TCP3 (44%). Malgré cela, de façon inattendue :

- le taux de déformation correspondant à l'apparition du seuil d'endommagement de la structure composite de renfort TCP 4 (selon l'invention) est supérieur d'au moins 50% à celui obtenu avec les structures composites de renfort TCP 1, TCP2 ou TCP3.
- le taux de déformation lors de la perte d'étanchéité (due à la fissure traversante) de la structure composite de renfort TCP 4 est supérieure d'au moins 100% à celui obtenu avec les structures composites de renfort TCP 1, TCP 2 ou TCP 3.

Ces résultats démontrent une amélioration des performances en flexion d'un TCP dont la structure composite de renfort est telle que définie dans la demande. Cette amélioration est plus importante que celle observée par la diminution du taux de fibres.

**Revendications**

**1.** Tuyau composite thermoplastique (1) destiné au transport de fluides comprenant, de l'intérieur vers l'extérieur :

- une gaine interne tubulaire (20) d'axe (A-A') définissant un passage interne (13) de circulation de fluides ; et
- une structure composite de renfort (21) autour de la gaine tubulaire (20) et qui est liée à la gaine tubulaire (20), la structure composite de renfort (21) comprenant un enroulement d'au moins deux couches de renfort laminées, chaque couche de renfort étant réalisée à partir d'une matrice thermoplastique (40) comprenant un polyétheréthercétone renforcée avec des fibres de carbone (42), ledit polyétheréthercétone ayant :

- une distribution de masse moléculaire en chromatographie par perméation de gel (GPC) telle que :

- la masse moléculaire moyenne en nombre (Mn) est supérieure à 38 000 g/mol,
- la masse moléculaire au pic (Mp) est supérieure à 70 000 g/mol, et
- l'indice de polydispersité (IP) est inférieur à 2,3, et

- une résistance au choc Charpy mesuré à 23°C selon la norme ISO 179/1eA de 2010 supérieure ou égale à 5,5 kJ/m$^2$.

**2.** Tuyau composite thermoplastique (1) selon la revendication 1, dont le polyétheréthercétone a une viscosité telle que mesurée à 400°C selon la norme ISO 11443 de 2021 supérieure à 200 Pa.s, notamment supérieure à 250 Pa.s, de préférence supérieure à 300 Pa.s.

**3.** Tuyau composite thermoplastique (1) selon la revendication 1 ou 2, dont le polyétheréthercétone est linéaire ou ramifié, et est de préférence ramifié.

**4.** Tuyau composite thermoplastique (1) selon l'une quelconque des revendications 1 à 3, dont le polyétheréthercétone a des groupes terminaux choisis dans le groupe constitué de fluor, hydrogène, éther de diphényle, phényle, méthylphényle, diméthylphényle et méthoxyphényle.

**5.** Tuyau composite thermoplastique (1) selon l'une quelconque des revendications 1 à 4, dont le polyétheréthercétone a été obtenu par polymérisation par substitution nucléophile ou par polymérisation par addition électrophile, de préférence par polymérisation par addition électrophile.

**6.** Tuyau composite thermoplastique (1) selon l'une quelconque des revendications 1 à 5, dont les fibres de carbone (42) ont un taux d'ensimage tel que déterminé selon la norme ISO 10548 de 2002 rectifiée en 2008 inférieur à 1%, notamment inférieur à 0,5%, et de préférence nul.

**7.** Tuyau composite thermoplastique (1) selon l'une quelconque des revendications 1 à 6, dans lequel le taux de fibre volumique des fibres de carbone (42) est de 30 à 70%, de préférence de 40 à 60%, de manière particulièrement préféré de 45 à 55% par rapport au volume de chaque couche de renfort.

**8.** Tuyau composite thermoplastique (1) selon l'une quelconque des revendications 1 à 7, comprenant au moins une couche d'étanchéité (22) en un matériau thermoplastique autour de la structure composite de renfort (21).

**9.** Conduite flexible (10) destinée au transport de fluides comprenant, de l'intérieur vers l'extérieur :

- le tuyau composite thermoplastique (1) selon l'une quelconque des revendications 1 à 8 ;
- au moins une nappe d'armures (24, 25) de traction, non liée la couche la plus externe (22) du tuyau composite thermoplastique (1), la au moins une nappe d'armures (24, 25) de traction comprenant au moins un élément d'armure (50) enroulé autour de ladite couche la plus externe (22) du tuyau composite thermoplastique (1) ; et
- optionnellement une gaine externe (30) d'étanchéité disposée autour de la au moins une nappe d'armures (24, 25) de traction.

**10.** Procédé de préparation du tuyau composite thermoplastique (1) l'une quelconque des revendications 1 à 8 comprenant les étapes suivantes :

- fourniture d'une gaine tubulaire (20) d'axe central (A-A') définissant un passage interne (13) de circulation de fluides ;
- formation d'une structure composite de renfort (21) autour de la gaine tubulaire (20) et liée à la gaine tubulaire (20), la structure composite de renfort (21) étant formée par enroulement d'au moins deux couches de renfort laminées, chaque couche de renfort ayant une matrice thermoplastique comprenant un polyétheréthercétone tel que défini à l'une quelconque des revendications 1 à 5 et renforcée avec des fibres de carbone (42) ;
- éventuellement, formation, autour de la structure composite de renfort (21), d'une couche d'étanchéité (22) en matériau thermoplastique.

**11.** Procédé de préparation d'une conduite flexible (10) selon la revendication 9 comprenant les étapes suivantes :

- fourniture du tuyau composite thermoplastique (1) l'une quelconque des revendications 1 à 8 ;
- disposition, autour de la couche la plus externe (22) du tuyau composite thermoplastique (1), d'au moins une nappe d'armures (24, 25) de traction, non liée à ladite couche la plus externe (22), la au moins une nappe d'armures (24, 25) de traction comprenant au moins un élément d'armure (50) enroulé autour de ladite couche la plus externe (22) ; et,
- optionnellement, disposition d'une gaine externe (30) d'étanchéité autour de la au moins une nappe d'armures (24, 25) de traction.

**12.** Utilisation d'un polyétheréthercétone ayant :

- une distribution de masse moléculaire en chromatographie par perméation de gel (GPC) telle que :

  - la masse moléculaire moyenne en nombre (Mn) est supérieure à 38 000 g/mol,
  - la masse moléculaire au pic (Mp) est supérieure à 70 000 g/mol, et
  - l'indice de polydispersité (IP) est inférieur à 2,3,

- une résistance au choc Charpy mesuré à 23°C selon la norme ISO 179/1eA de 2010 supérieure ou égale à 5,5 kJ/m$^2$,
- et éventuellement une viscosité telle que mesurée à 400°C selon la norme ISO 11443 de 2021 supérieure à 200 Pa.s,

comme matériau polymérique d'une matrice thermoplastique (40), renforcée avec des fibres de carbone (42), de couches de renfort laminées et enroulées pour former une structure composite de renfort (21) d'un tuyau composite thermoplastique (1) destiné au transport de fluides et comprenant, de l'intérieur vers l'extérieur :

  - une gaine interne tubulaire (20) d'axe (A-A') définissant un passage interne (13) de circulation de fluides ;
  - ladite structure composite de renfort (21) autour de la gaine tubulaire (20) et qui est liée à la gaine tubulaire (20),
  - éventuellement au moins une couche d'étanchéité (22) en matériau thermoplastique autour de la structure composite de renfort (21),

pour réduire le rayon de courbure minimal dudit tuyau composite thermoplastique (1) et/ou pour augmenter le taux de déformation en flexion lors du seuil d'endommagement dudit tuyau composite thermoplastique (1).

**Patentansprüche**

1. Thermoplastischer Verbundschlauch (1) für den Transport von Fluiden, umfassend von innen nach außen:

   - einen rohrförmigen Mantel (20) mit Achse (A-A'), der einen inneren Durchgang (13) zur Fluidzirkulation definiert; und
   - eine Verstärkungsverbundstruktur (21) um den rohrförmige Mantel (20) herum, die mit dem rohrförmigen Mantel (20) verbunden ist, die Verstärkungsverbundstruktur (21) umfassend eine Wicklung aus mindestens zwei laminierten Verstärkungsschichten, wobei jede Verstärkungsschicht aus einer thermoplastischen Matrix (40) gefertigt ist, umfassend ein mit Kohlenstofffasern (42) verstärktes Polyetheretherketon, wobei das Polyetheretherketon Folgendes aufweist:

     - eine Molekulargewichtsverteilung in Gelpermeationschromatographie (GPC), sodass:

       - das zahlenmittlere Molekulargewicht (Mn) größer ist als 38.000 g/mol,
       - das Spitzenmolekulargewicht (Mp) größer ist als 70.000 g/mol, und
       - der Polydispersitätsindex (PI) kleiner ist als 2,3, und

     - eine Charpy-Schlagzähigkeit, gemessen bei 23 °C nach ISO 179/1eA von 2010, von mindestens 5,5 kJ/m$^2$.

2. Thermoplastischer Verbundschlauch (1) nach Anspruch 1, dessen Polyetheretherketon eine Viskosität, gemessen bei 400 °C nach ISO 11443 von 2021, von mehr als 200 Pa.s, insbesondere mehr als 250 Pa.s, vorzugsweise mehr als 300 Pa.s, aufweist.

3. Thermoplastischer Verbundschlauch (1) nach Anspruch 1 oder 2, wobei das Polyetheretherketon linear oder verzweigt ist, und vorzugsweise verzweigt ist.

4. Thermoplastischer Verbundschlauch (1) nach einem der Ansprüche 1 bis 3, dessen Polyetheretherketon Endgruppen aufweist, die ausgewählt sind aus der Gruppe, bestehend aus Fluor, Wasserstoff, Diphenylether, Phenyl, Methylphenyl, Dimethylphenyl und Methoxyphenyl.

5. Thermoplastischer Verbundschlauch (1) nach einem der Ansprüche 1 bis 4, dessen Polyetheretherketon durch nukleophile Substitutionspolymerisation oder durch elektrophile Additionspolymerisation, vorzugsweise durch elektrophile Additionspolymerisation, erlangt worden ist.

6.  Thermoplastischer Verbundschlauch (1) nach einem der Ansprüche 1 bis 5, dessen Kohlenstofffasern (42) einen Schlichtegrad, bestimmt nach der Norm ISO 10548 von 2002, überarbeitet 2008, von weniger als 1 %, insbesondere weniger als 0,5 %, und vorzugsweise Null aufweisen.

7.  Thermoplastischer Verbundschlauch (1) nach einem der Ansprüche 1 bis 6, wobei der Volumenfaseranteil der Kohlenstofffasern (42) 30 bis 70 %, vorzugsweise 40 bis 60 %, besonders bevorzugt 45 bis 55 %, bezogen auf das Volumen jeder Verstärkungsschicht, ist.

8.  Thermoplastischer Verbundschlauch (1) nach einem der Ansprüche 1 bis 7, umfassend mindestens eine Dichtungsschicht (22) aus einem thermoplastischen Material um die Verstärkungsverbundstruktur (21) herum.

9.  Flexible Leitung (10) für den Transport von Fluiden, umfassend von innen nach außen:

    - den thermoplastischen Verbundschlauch (1) nach einem der Ansprüche 1 bis 8;
    - mindestens eine Zugbewehrungslage (24, 25), die nicht mit der äußersten Schicht (22) des thermoplastischen Verbundschlauchs (1) verbunden ist, die mindestens eine Zugbewehrungslage (24, 25) umfassend mindestens ein Bewehrungselement (50), das um die äußerste Schicht (22) des thermoplastischen Verbundschlauchs (1) gewickelt ist; und
    - optional einen äußeren Dichtungsmantel (30), der um die mindestens eine Zugbewehrungslage (24, 25) herum angeordnet ist.

10. Verfahren zur Herstellung des thermoplastischen Verbundschlauchs (1) nach einem der Ansprüche 1 bis 8, umfassend die folgenden Schritte:

    - Bereitstellen eines rohrförmigen Mantels (20) mit Mittelachse (A-A'), der einen inneren Durchgang (13) zur Fluidzirkulation definiert;
    - Bilden einer Verstärkungsverbundstruktur (21) um den rohrförmigen Mantel (20) herum und verbunden mit dem rohrförmigen Mantel (20), wobei die Verstärkungsverbundstruktur (21) durch Wickeln von mindestens zwei laminierten Verstärkungsschichten gebildet wird, wobei jede Verstärkungsschicht eine thermoplastische Matrix aufweist, umfassend ein Polyetheretherketon, wie definiert in einem der Ansprüche 1 bis 5, und mit Kohlenstofffasern (42) verstärkt ist;
    - eventuell Bilden, um die Verstärkungsverbundstruktur (21) herum, einer Dichtungsschicht (22) aus thermoplastischem Material.

11. Verfahren zur Herstellung einer flexiblen Leitung (10) nach Anspruch 9, umfassend die folgenden Schritte:

    - Bereitstellen des thermoplastischen Verbundschlauchs (1) einem der Ansprüche 1 bis 8;
    - Anordnen, um die äußerste Schicht (22) des thermoplastischen Verbundschlauchs (1), von mindestens einer Zugbewehrungslage (24, 25), die nicht mit der äußersten Schicht (22) verbunden ist, die mindestens eine Zugbewehrungslage (24, 25) umfassend mindestens ein Bewehrungselement (50), das um die äußerste Schicht (22) gewickelt ist; und,
    - optional Anordnen eines äußeren Dichtungsmantels (30) um die mindestens eine Zugbewehrungslage (24, 25).

12. Verwendung eines Polyetheretherketons, das Folgendes aufweist:

    - eine Molekulargewichtsverteilung in Gelpermeationschromatographie (GPC), sodass:

        - das zahlenmittlere Molekulargewicht (Mn) größer ist als 38.000 g/mol,
        - das Spitzenmolekulargewicht (Mp) größer ist als 70.000 g/mol, und
        - der Polydispersitätsindex (PI) kleiner ist als 2,3,

    - eine Charpy-Schlagzähigkeit, gemessen bei 23 °C nach ISO 179/1eA von 2010, von mindestens 5,5 kJ/m$^2$.
    - und eventuell eine Viskosität, gemessen bei 400 °C gemäß der Norm ISO 11443 von 2021, von mehr als 200 Pa.s,
    als Polymermaterial einer thermoplastischen Matrix (40), verstärkt mit Kohlenstofffasern (42), von Verstärkungsschichten, die laminiert und gewickelt werden, um eine Verstärkungsverbundstruktur (21) eines thermoplastischen Verbundschlauchs (1) zu bilden, der zum Transport von Fluiden bestimmt ist und von innen nach außen Folgendes umfasst:

- einen rohrförmigen Mantel (20) mit Achse (A-A'), der einen inneren Durchgang (13) zur Fluidzirkulation definiert;
- die genannte Verstärkungsverbundstruktur (21) um den rohrförmigen Mantel (20) herum und die mit dem rohrförmigen Mantel (20) verbunden ist,
- eventuell mindestens eine Dichtungsschicht (22) aus thermoplastischem Material um die Verstärkungsverbundstruktur (21) herum,

um den minimalen Biegeradius des thermoplastischen Verbundschlauchs (1) zu verringern und/oder um die Biegeverformungsrate bei dem Beschädigungsschwellenwert des thermoplastischen Verbundschlauchs (1) zu erhöhen.

**Claims**

1. A thermoplastic composite hose (1) intended for transporting fluids, comprising from the inside toward the outside:

   - a tubular internal sheath (20) of axis (A-A') defining an inner passageway (13) for the circulation of fluids; and
   - a reinforcing composite structure (21) around the tubular sheath (20) and which is bonded to the tubular sheath (20), the reinforcing composite structure (21) comprising a winding of at least two laminated reinforcing layers, each reinforcing layer being made from a thermoplastic matrix (40) comprising a polyether ether ketone reinforced with carbon fibres (42), said polyether ether ketone having:

     - a molecular weight distribution by gel permeation chromatography (GPC) such that:

       - the number average molecular weight (Mn) is higher than 38 000 g/mol,
       - the peak molecular weight (Mp) is higher than 70 000 g/mol, and
       - the polydispersity index (PI) is lower than 2.3, and

     - a Charpy Impact strength measured at 23 °C according to standard ISO 179/1eA of 2010 greater than or equal to 5.5 kJ/m$^2$.

2. The thermoplastic composite hose (1) according to claim 1 wherein the polyether ether ketone has viscosity, such as measured at 400 °C according to standard ISO 11443 of 2021, higher than 200 Pa.s, in particular higher than 250 Pa.s, preferably higher than 300 Pa.s.

3. The thermoplastic composite hose (1) according to claim 1 or 2, wherein the polyether ether ketone is linear or branched, and is preferably branched.

4. The thermoplastic composite hose (1) according to any of claims 1 to 3, wherein the polyether ether ketone has terminal groups chosen from the group composed of fluorine, hydrogen, diphenyl ether, phenyl, methylphenyl, dimethylphenyl and methoxyphenyl.

5. The thermoplastic composite hose (1) according to any of claims 1 to 4, wherein the polyether ether ketone was obtained by polymerization via nucleophilic substitution or by polymerization via electrophilic addition, preferably by polymerization via electrophilic addition.

6. The thermoplastic composite hose (1) according to any of claims 1 to 5, wherein the carbon fibres (42) have a size content such as determined according to standard ISO 10548 of 2002 corrected in 2008 of less than 1 %, in particular less than 0.5 %, and preferably zero.

7. The thermoplastic composite hose (1) according to any of claims 1 to 6, wherein the volume proportion of carbon fibres (42) is from 30 to 70 %, preferably from 40 to 60 %, in particularly preferred manner from 45 to 55 % relative to the volume of each reinforcing layer.

8. The thermoplastic composite hose (1) according to any of claims 1 to 7, comprising at least one sealing layer (22) in a thermoplastic material around the reinforcing composite structure (21).

9. A flexible pipe (10) intended for transporting fluids comprising, from the inside toward the outside:

- the thermoplastic composite hose (1) according to any of claims 1 to 8;
- at least one tensile armour layer (24, 25) not bonded to the outermost layer (22) of the thermoplastic composite hose (1), the at least one tensile armour layer (24, 25) comprising at least one armour element (50) wound around said outermost layer (22) of the thermoplastic composite hose (1); and
- optionally, an outer sealing sheath (30) arranged around said at least one tensile armour layer (24, 25).

10. A method for preparing the thermoplastic composite hose (1) according to any of claims 1 to 8, comprising the following steps:

- providing a tubular sheath (20) of central axis (A-A') defining an inner passageway (13) for the circulation of fluids;
- forming a reinforcing composite structure (21) around the tubular sheath (20) and bonded to the tubular sheath (20), the reinforcing composite structure (21) being formed by winding at least two laminated reinforcing layers, each reinforcing layer having a thermoplastic matrix comprising a polyether ether ketone such as defined in any of claims 1 to 5 and reinforced with carbon fibres (42);
- optionally, forming around the reinforcing composite structure (21), a sealing layer (22) in thermoplastic material.

11. A method for preparing a flexible pipe (10) according to claim 9, comprising the following steps:

- providing the thermoplastic composite hose (1) according to any of claims 1 to 8;
- arranging, around the outermost layer (22) of the thermoplastic composite hose (1), at least one tensile armour layer (24, 25) not bonded to said outermost layer (22), the at least one tensile armour layer (24, 25) comprising at least one armour element (50) wound around said outermost layer (22); and
- optionally, arranging an outer sealing sheath (30) around said at least one tensile armour layer (24, 25).

12. Use of a polyether ether ketone having:

- a molecular weight distribution by gel permeation chromatography (GPC) such that:

- the number average molecular weight (Mn) is higher than 38 000 g/mol,
- the peak molecular weight (Mp) is higher than 70 000 g/mol, and
- the polydispersity index (PI) is lower than 2.3,

- a Charpy impact strength measured at 23 °C according to standard ISO 179/1eA of 2010 greater than or equal to 5.5 kJ/m$^2$,
- and optionally viscosity, such as measured at 400 °C according to standard ISO 11443 of 2021, higher than 200 Pa.s,

as polymer material of a thermoplastic matrix (40), reinforced with carbon fibres (42), for laminated reinforcing layers that are wound to form a reinforcing composite structure (21) of a thermoplastic composite hose (1) intended for the transporting of fluids and comprising, from the inside toward the outside:

- a tubular internal sheath (20) of axis (A-A') defining an inner passageway (13) for the circulation of fluids;
- said reinforcing composite structure (21) around the tubular sheath (20) and which is bonded to the tubular sheath (20),
- optionally at least one sealing layer (22) in thermoplastic material around the reinforcing composite structure (21),

to reduce the minimum bend radius of said thermoplastic composite hose (1) and/or to increase the flexural strain rate at the damage threshold of said thermoplastic composite hose (1).

FIG.1

FIG.2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2006059220 A
- GB 2504065 A
- WO 2018091693 A
- WO 2021019180 A
- US 20020040124 A
- CN 1162602 A
- WO 2019150060 A
- WO 2019180050 A
- WO 2019068757 A

**Littérature non-brevet citée dans la description**

- Standard Practice - Thermoplastic composites pipes. DNV GL (Det Norske Veritas GL), September 2019
- Specification for Unbonded Flexible Pipe. l'American Petroleum Institute, May 2014
- **N. DODDS** ; **V. JHA** ; **J. LATTO** ; **D. FINCH**. Unbonded Flexible Pipe : Composite Reinforcement for Optimized Hybrid Design. *Offshore Technology Conference*, 04 May 2015
- **EMMANUEL RICHAUD** ; **BRUNO FLACONNÈCHE** ; **JACQUES VERDU**. Biodiesel permeability in polyethylene. *Polymer Testing*, 2012, vol. 31, 170-1076